# EUROPEAN PATENT APPLICATION

(11) **EP 4 395 213 A1**
(43) Date of publication of application: **03.07.2024**
(21) Application number: 22866382.9
(22) Date of filing: 19.08.2022
(51) Int. Cl.: H04L 5/00, H04W 72/23, H04W 72/12

(54) **DATA TRANSMISSION METHOD AND APPARATUS**

(30) Priority: 13.09.2021 CN 202111066360; 28.04.2022 CN 202210460431
(71) Applicant: Huawei Technologies Co., Ltd., Shenzhen, Guangdong 518129 (CN)
(72) Inventor: CHEN, Erkai, Shenzhen, Guangdong 518129 (CN); LIAO, Shuri, Shenzhen, Guangdong 518129 (CN); CAO, Youlong, Shenzhen, Guangdong 518129 (CN); XU, Rui, Shenzhen, Guangdong 518129 (CN); DOU, Shengyue, Shenzhen, Guangdong 518129 (CN)
(74) Representative: Roth, Sebastian
(86) International application number: PCT/CN2022/113653
(87) International publication number: WO 2023/035909

(57) **Abstract**

A data transmission method and an apparatus are provided. In the method, a terminal receives configured grant (configured grant, CG) information from a network device; obtains a configured quantity N of transport blocks (transport blocks, TBs) in a CG periodicity based on the CG information, where the configured quantity N of TBs is a maximum quantity of TBs transmittable in the CG periodicity, and N is an integer greater than 0; and sends, to the network device in the CG periodicity, uplink data corresponding to M TB, where M is an integer greater than 0 and less than or equal to N. According to the method, complete transmission of an XR video frame can be completed in the CG periodicity, thereby improving user experience of receiving an XR service.

## Description

This application claims priority to Chinese Patent Application No. 202210460431.0, filed with the China National Intellectual Property Administration on April 28, 2022 and entitled "DATA TRANSMISSION METHOD AND APPARATUS", and claims priority to Chinese Patent Application No. 202111066360.8, filed with the China National Intellectual Property Administration on September 13, 2021 and entitled "DATA TRANSMISSION METHOD AND APPARATUS", which are incorporated herein by reference in their entireties.

### TECHNICAL FIELD

This application relates to the field of communication technologies, and in particular, to a data transmission method and an apparatus.

### BACKGROUND

In a wireless communication network, an extended reality (extended reality, XR) technology has advantages such as multiple views and strong interaction to provide brand-new visual experience for users, and has great application value and commercial potential. XR includes virtual reality (virtual reality, VR), augmented reality (augmented reality, AR), mixed reality (mixed reality, MR), and other technologies, and can be widely applied to entertainment, gaming, medical care, advertising, industry, online education, engineering, and other fields.

An amount of XR data is generally large and dynamically changes. Therefore, how to efficiently transmit the XR data by properly using limited radio resources is an urgent problem to be resolved.

### SUMMARY

According to a first aspect, an embodiment of this application provides a communication method. The method may be performed by a terminal, or may be performed by a component (for example, a processor, a chip, or a chip system) of the terminal, or may be implemented by a logical module or software that can implement all or some functions of the terminal. The method includes: receiving configured grant (configured grant, CG) information from a network device; obtaining a configured quantity N of transport blocks (transport blocks, TBs) in a CG periodicity based on the CG information, where the configured quantity N of TBs is a maximum quantity of TBs transmittable in the CG periodicity, and N is an integer greater than 0; and sending, to the network device in the CG periodicity, uplink data corresponding to M TB, where M is an integer greater than 0 and less than or equal to N.

The TB in this application may also be understood as a physical uplink shared channel (physical uplink shared channel, PUSCH), a PUSCH transmission opportunity, a slot, or a time domain symbol that carries the TB. The quantity of TBs in this application may also be understood as a quantity of PUSCHs, PUSCH transmission opportunities, slots, or time domain symbols that carry the TBs.

Optionally, the CG information is carried in a radio resource control (radio resource control, RRC) message. For example, the CG information may be a ConfiguredGrantConfig information element in the RRC message.

Optionally, the method further includes: obtaining duration of the CG periodicity based on the CG information.

According to the method, complete transmission of an XR video frame can be completed in the CG periodicity, thereby improving user experience of receiving an XR service.

With reference to the first aspect, in some implementations of the first aspect, the CG information includes information about the configured quantity of TBs. The obtaining a configured quantity N of TBs in a CG periodicity based on the CG information includes: obtaining the configured quantity N of TBs based on the information about the configured quantity of TBs.

In the foregoing implementation of the CG information, the maximum quantity of TBs transmittable in the CG periodicity may be configured by using a dedicated field or information element in the CG information. Because a value range of the dedicated field or information element may be specially designed to implement the configuration of the maximum quantity of TBs transmittable in the CG periodicity, the configuration of the maximum quantity of TBs transmittable in the CG periodicity can be more targeted.

With reference to the first aspect, in some implementations of the first aspect, the CG information includes configuration information of repeated transmission and information about a quantity of repeated transmissions. The obtaining a configured quantity N of TBs in a CG periodicity based on the CG information includes: obtaining the configured quantity N of TBs based on the configuration information of repeated transmission and the information about the quantity of repeated transmissions. This implementation may be understood as reusing the information about the quantity of repeated transmissions in the CG information, to configure the maximum quantity of TBs transmittable in the CG periodicity. The configuration information of repeated transmission may be understood as a function for configuring the information about the quantity of repeated transmissions. When the configuration information of repeated transmission is set to a preset value, the information about the quantity of repeated transmissions is used to configure the maximum quantity of TBs transmittable in the CG periodicity. When the configuration information of repeated transmission is set to another preset value, the information about the quantity of repeated transmissions is used to configure the quantity of repeated transmissions in the CG periodicity.

Optionally, when the configuration information of repeated transmission is set to a preset value, the configured quantity N of TBs is obtained based on the information about the quantity of repeated transmissions.

In the foregoing implementation of the CG information, the information about the quantity of repeated transmissions in the CG information may be reused to configure the maximum quantity of TBs transmittable in the CG periodicity, to reduce overheads of the configuration information.

With reference to the first aspect, in some implementations of the first aspect, the method further includes: sending uplink control information (uplink control information, UCI) to the network device, where the UCI indicates M. The method may be understood as indicating, to the network device by using the UCI, a quantity M of TBs actually sent to the network device in the CG periodicity. Optionally, the UCI is configured grant UCI (CG-UCI), and the CG-UCI is used to send CG-related control information to the network device. Optionally, the UCI may be carried on a physical uplink shared channel (physical uplink shared channel, PUSCH), or may be carried on a physical uplink control channel (physical uplink control channel, PUCCH).

Optionally, the UCI includes active TB information, and the active TB information indicates M. Optionally, the active TB information is information about a quantity of active TBs or information about an active TB bitmap. Further, optionally, the UCI includes one or more of the following information: hybrid automatic repeat request (hybrid automatic repeat request, HARQ) information, redundancy version (redundancy version, RV) information, new data indicator (new data indicator, NDI) information, or channel occupancy time (channel occupancy time, COT) sharing information.

With reference to the first aspect, in some implementations of the first aspect, the sending UCI to the network device includes: sending the UCI to the network device in a first time unit, where the first time unit is a time unit corresponding to a 1^{st} TB in the configured N TBs. The first time unit may be one or more slots, or may be one or more time domain symbols. The time unit corresponding to the 1^{st} TB may be understood differently. For example, the time unit corresponding to the 1^{st} TB may be understood as a slot or a time domain symbol corresponding to the 1^{st} TB in the N TBs configured in the CG periodicity, or may be understood as a slot or a time domain symbol corresponding to the 1^{st} TB in the N TBs configured in the CG periodicity after data arrives. In this implementation, the terminal may notify, as early as possible vias the UCI, the network device of a quantity M of TBs actually sent in the CG periodicity, so that the network device can learn of M in time, to allocate, based on the actual quantity of TBs, an unused resource to another terminal for use, thereby avoiding a waste of resources.

With reference to the first aspect, in some implementations of the first aspect, the sending the UCI to the network device in a first time unit includes: when an interval between a second time unit and the first time unit is greater than a first threshold, sending the UCI to the network device in the first time unit. The second time unit is a time unit corresponding to an N^{th} TB in the configured N TBs. The second time unit may be one or more slots, or may be one or more time domain symbols. The time unit corresponding to the N^{th} TB may be understood as a slot or a time domain symbol corresponding to the N^{th} TB (namely, a last TB) in the N TBs configured in the CG periodicity. In this implementation, when a remaining resource in the CG periodicity cannot be used to schedule another terminal due to an excessively large processing delay of the network device, the terminal may not send the UCI, to reduce signaling overheads.

With reference to the first aspect, in some implementations of the first aspect, the sending the UCI to the network device in a first time unit includes: when an amount of to-be-transmitted data is greater than a second threshold, sending the UCI to the network device in the first time unit. The amount of to-be-transmitted data may be an amount of to-be-transmitted data corresponding to a logical channel corresponding to a CG. The CG may be a CG configured by using the CG information. In this implementation, when the configured N TBs cannot carry the amount of to-be-transmitted data, it indicates that a configured resource is insufficient. In this case, the network device is notified via the UCI, and the network device may allocate an additional transmission resource based on the UCI, to transmit remaining data in time, and reduce a transmission delay.

With reference to the first aspect, in some implementations of the first aspect, the method further includes: sending a media access control (media access control, MAC) control element (control element, CE) to the network device, where the MAC CE indicates at least one of M or a buffer size (buffer size). The MAC CE may be used to report at least one of M or the buffer size to the network device based on a logical channel (logical channel, LCH) or a logical channel group (logical channel group, LCG).

When the MAC CE is used to report at least one of M or the buffer size to the network device based on the LCH, the MAC CE includes an identifier of the LCH, and further includes information indicating at least one of M or the buffer size. The identifier of the LCH may be, for example, an LCH ID, the information indicating M may be, for example, carried in a cg-ActiveTB field, and the information indicating the buffer size may be, for example, carried in a Buffer Size field. In this implementation, the network device may learn of information about at least one of a quantity M of actually sent TBs or a buffer size corresponding to a specific LCH, so that the network device can perform more fine-grained scheduling (for example, scheduling at an LCH granularity), to improve resource utilization.

When the MAC CE is used to report at least one of M or the buffer size to the network device based on the LCG, the MAC CE includes an identifier of the LCG, and further includes information indicating at least one of M or the buffer size. The identifier of the LCG may be, for example, an LCG ID, the information indicating M may be, for example, carried in a cg-ActiveTB field, and the information indicating the buffer size may be, for example, carried in a Buffer Size field. In this implementation, the network device may reuse a buffer status report (buffer size report, BSR) mechanism to report information about at least one of a quantity M of actually sent TBs or a buffer size corresponding to the LCG, to provide a reference for scheduling of the network device, and improve resource utilization.

With reference to the first aspect, in some implementations of the first aspect, the sending a MAC CE to the network device includes: sending the MAC CE to the network device in a first time unit, where the first time unit is a time unit corresponding to a 1^{st} TB in the configured N TBs. The first time unit may be one or more slots, or may be one or more time domain symbols. The time unit corresponding to the 1^{st} TB may be understood differently. For example, the time unit corresponding to the 1^{st} TB may be understood as a slot or a time domain symbol corresponding to the 1^{st} TB in the N TBs configured in the CG periodicity, or may be understood as a slot or a time domain symbol corresponding to the 1^{st} TB in the N TBs configured in the CG periodicity after data arrives. In this implementation, the terminal may notify, as early as possible via the MAC CE, the network device of a quantity M of TBs actually sent in the CG periodicity, so that the network device can learn of M in time, to allocate, based on the actual quantity of TBs, an unused resource to another terminal for use, thereby avoiding a waste of resources.

With reference to the first aspect, in some implementations of the first aspect, the sending the MAC CE to the network device in a first time unit includes: when an interval between a second time unit and the first time unit is greater than a first threshold, sending the MAC CE to the network device in the first time unit, where the second time unit is a time unit corresponding to an N^{th} TB in the configured N TBs. The second time unit may be one or more slots, or may be one or more time domain symbols. The time unit corresponding to the N^{th} TB may be understood as a slot or a time domain symbol corresponding to the N^{th} TB (namely, a last TB) in the N TBs configured in the CG periodicity. In this implementation, when a remaining resource in the CG periodicity cannot be used to schedule another terminal due to an excessively large processing delay of the network device, the terminal may not send the MAC CE, to reduce signaling overheads.

With reference to the first aspect, in some implementations of the first aspect, the sending the MAC CE to the network device in a first time unit includes: when an amount of to-be-transmitted data is greater than a second threshold, sending the MAC CE to the network device in the first time unit. The amount of to-be-transmitted data may be an amount of to-be-transmitted data corresponding to a logical channel corresponding to a CG. The CG may be a CG configured by using the CG information. In this implementation, when the configured N TBs cannot carry the amount of to-be-transmitted data, it indicates that a configured resource is insufficient. In this case, the network device is notified via the MAC CE, and the network device may allocate an additional transmission resource based on the MAC CE, to transmit remaining data in time, and reduce a transmission delay.

With reference to the first aspect, in some implementations of the first aspect, the sending the MAC CE to the network device in a first time unit includes:
when a preset parameter is received or the preset parameter is set to a preset value, or
when an interval between a second time unit and the first time unit is greater than a first threshold, and a preset parameter is received or the preset parameter is set to a preset value, or
when an amount of to-be-transmitted data is greater than a second threshold, and a preset parameter is received or the preset parameter is set to a preset value,
sending the MAC CE to the network device in the first time unit.

When the MAC CE is used to report at least one of M or the buffer size to the network device based on the LCH, the preset parameter may be, for example, represented as enhanced-per-LCH-BSR. In a possible implementation method, when enhanced-per-LCH-BSR is received, the MAC CE is sent to the network device in the first time unit. In another possible implementation method, when enhanced-per-LCH-BSR is set to the preset value, the MAC CE is sent to the network device in the first time unit. The preset value may be, for example, "true", "enable", "0", or "1 ".

When the MAC CE is used to report at least one of M or the buffer size to the network device based on the LCG, the preset parameter may be, for example, represented as enhanced-cg-BSR. In a possible implementation method, when enhanced-cg-BSR is received, the MAC CE is sent to the network device in the first time unit. In another possible implementation method, when enhanced-cg-BSR is set to the preset value, the MAC CE is sent to the network device in the first time unit. The preset value may be, for example, "true", "enable", "0", or " 1".

In the foregoing implementation, the terminal device may determine, based on a specific condition, whether it is necessary to send the MAC CE to the network device, to avoid an invalid signaling indication and a waste of resources.

With reference to the first aspect, in some implementations of the first aspect, the first threshold is predefined, or is configured by the network device.

When the first threshold is predefined, the first threshold may be a value pre-specified in a protocol.

When the first threshold is configured by the network device, the network device may configure the first threshold by using an information element in an RRC message. The information element in the RRC message used to configure the first threshold may be a newly defined information element, or an existing information element may be reused. For example, a cg-minDFI-Delay information element may be reused to configure the first threshold, where cg-minDFI-Delay represents a minimum time interval from an end symbol of a PUSCH to a start symbol of a PDCCH including a downlink feedback indicator (downlink feedback indicator, DFI) that carries a HARQ-ACK corresponding to the PUSCH. The first threshold may alternatively be jointly determined by two or more information elements/parameters. For example, the first threshold may be determined based on both a value C1 configured by using the cg-minDFI-Delay information element and a value of K2. K2 represents a minimum time interval from receiving, by the terminal, downlink scheduling information carried in downlink control information (downlink control information, DCI) to sending uplink data on a PUSCH scheduled via the downlink scheduling information. For example, the first threshold may be represented as C1+K2. The value of K2 may be indicated by the downlink scheduling information (for example, may be indicated by a "minimum applicable scheduling offset indicator" field in the downlink scheduling information), or may be configured by the network device by using an information element in the RRC message (for example, may be configured by using a minimumSchedulingOffsetK2 information element).

In the foregoing implementation, the terminal device may learn of a processing delay of the network device. When a remaining resource in the CG periodicity cannot be used to schedule another terminal due to an excessively large processing delay of the network device, the terminal device does not need to send the UCI or the MAC CE, to reduce signaling overheads.

With reference to the first aspect, in some implementations of the first aspect, the second threshold is a total amount of data that the configured N TBs is capable of carrying. In this implementation, when the configured N TBs cannot carry the amount of to-be-transmitted data, it indicates that a configured resource is insufficient. In this case, the network device is notified via the UCI or the MAC CE, and the network device may allocate an additional transmission resource based on the UCI or the MAC CE, to transmit remaining data in time, and reduce a transmission delay.

In the foregoing implementation, the network device may learn of a quantity of TBs actually transmitted by the terminal in the CG periodicity, so that the network device can schedule, to another terminal for use, a CG resource that is not occupied by the terminal in the CG periodicity, to avoid a waste of resources and improve resource utilization. In addition, in the foregoing implementation, for the CG resource that is not occupied by the terminal, the network device does not mistakenly consider that the terminal fails to perform transmission on the CG resource. Therefore, the network device does not need to send scheduling information to the terminal to indicate data retransmission, to avoid unnecessary signaling overheads.

According to a second aspect, an embodiment of this application provides a communication method. The method may be performed by a network device, or may be performed by a component (for example, a processor, a chip, or a chip system) of the network device, or may be implemented by a logical module or software that can implement all or some functions of the network device. The method includes: sending CG information to a terminal, where the CG information is used to configure a configured quantity N of TBs in a CG periodicity, the configured quantity N of TBs is a maximum quantity of TBs transmittable in the CG periodicity, and N is an integer greater than 0; and receiving, from the terminal in the CG periodicity, uplink data corresponding to M TB, where M is an integer greater than 0 and less than or equal to N.

Optionally, the CG information is carried in an RRC message. For example, the CG information may be a ConfiguredGrantConfig information element in the RRC message.

Optionally, the CG information is further used to configure duration of the CG periodicity.

With reference to the second aspect, in some implementations of the second aspect, the CG information includes information about the configured quantity of TBs, and the information of the configured quantity of TBs is used to configure N.

With reference to the second aspect, in some implementations of the second aspect, the CG information includes configuration information of repeated transmission and information about a quantity of repeated transmissions, and the configuration information of repeated transmission and the information about the quantity of repeated transmissions are used to configure N. This implementation may be understood as reusing the information about the quantity of repeated transmissions in the CG information, to configure the maximum quantity of TBs transmittable in the CG periodicity. The configuration information of repeated transmission may be understood as a function for configuring the information about the quantity of repeated transmissions. When the configuration information of repeated transmission is set to a preset value, the information about the quantity of repeated transmissions is used to configure the maximum quantity of TBs transmittable in the CG periodicity. When the configuration information of repeated transmission is set to another preset value, the information about the quantity of repeated transmissions is used to configure the quantity of repeated transmissions in the CG periodicity.

Optionally, when the configuration information of repeated transmission is set to a preset value, the information about the quantity of repeated transmissions is used to configure N.

With reference to the second aspect, in some implementations of the second aspect, the method further includes: receiving UCI from the terminal, and obtaining M based on the UCI. The method may be understood as indicating, to the network device by using the UCI, a quantity M of TBs actually sent to the network device in the CG periodicity. Optionally, the UCI is CG-UCI, and the CG-UCI is used to send CG-related control information to the network device. Optionally, the UCI may be carried on a PUSCH, or may be carried on a PUCCH.

Optionally, the UCI includes active TB information. The obtaining M based on the UCI includes: obtaining M based on the active TB information. Optionally, the active TB information is information about a quantity of active TBs or information about an active TB bitmap. Further, optionally, the UCI further includes one or more of HARQ information, RV information, NDI information, or COT sharing information.

With reference to the second aspect, in some implementations of the second aspect, the receiving UCI from the terminal includes: receiving the UCI from the terminal in a first time unit, where the first time unit is a time unit corresponding to a 1^{st} TB in the configured N TBs. The first time unit may be one or more slots, or may be one or more time domain symbols. The time unit corresponding to the 1^{st} TB may be understood differently. For example, the time unit corresponding to the 1^{st} TB may be understood as a slot or a time domain symbol corresponding to the 1^{st} TB in the N TBs configured in the CG periodicity, or may be understood as a slot or a time domain symbol corresponding to the 1^{st} TB in the N TBs configured in the CG periodicity after data arrives. In this implementation, the network device may learn of, as early as possible via the UCI, a quantity M of TBs actually sent in the CG periodicity, to allocate, based on the actual quantity of TBs, an unused resource to another terminal for use, and avoid a waste of resources.

With reference to the second aspect, in some implementations of the second aspect, the method further includes: receiving a MAC CE from the terminal, and obtaining at least one of M or a buffer size based on the MAC CE.

It may be understood that when the buffer size is obtained, the network device may further obtain M. The network device learns of an amount of data that can be carried by each of the N TBs configured in the CG periodicity, and may determine, with reference to the buffer size (which may also be understood as an amount of to-be-transmitted data), a quantity M of TBs actually required by the terminal for transmission in the CG periodicity.

In the foregoing implementation, the network device may learn of at least one of M or the buffer size via the MAC CE, to allocate an unused resource to another terminal for use, and avoid a waste of resources.

With reference to the second aspect, in some implementations of the second aspect, the receiving a MAC CE from the terminal includes: receiving the MAC CE from the terminal in a first time unit, where the first time unit is a time unit corresponding to a 1^{st} TB in the configured N TBs. The first time unit may be one or more slots, or may be one or more time domain symbols. The time unit corresponding to the 1^{st} TB may be understood differently. For example, the time unit corresponding to the 1^{st} TB may be understood as a slot or a time domain symbol corresponding to the 1^{st} TB in the N TBs configured in the CG periodicity, or may be understood as a slot or a time domain symbol corresponding to the 1^{st} TB in the N TBs configured in the CG periodicity after data arrives. In this implementation, the network device may learn of, as early as possible via the MAC CE, at least one of a quantity M of TBs actually sent in the CG periodicity or a buffer size, to allocate an unused resource to another terminal for use, and avoid a waste of resources.

According to a third aspect, an embodiment of this application provides an apparatus. The apparatus may implement the method according to any one of the first aspect or the possible implementations of the first aspect. The apparatus includes a corresponding unit or module configured to perform the method. The unit or module included in the apparatus may be implemented by software and/or hardware. For example, the apparatus may be a terminal, or may be a chip, a chip system, or a processor that supports the terminal in implementing the method, or may be a logical module or software that can implement all or some functions of the terminal.

According to a fourth aspect, an embodiment of this application provides an apparatus. The apparatus may implement the method according to any one of the second aspect or the possible implementations of the second aspect. The apparatus includes a corresponding unit or module configured to perform the method. The unit or module included in the apparatus may be implemented by software and/or hardware. For example, the apparatus may be a network device, or may be a chip, a chip system, or a processor that supports the network device in implementing the method, or may be a logic module or software that can implement all or some functions of the network device.

According to a fifth aspect, an embodiment of this application provides an apparatus, including a processor. The processor is coupled to a memory, the memory is configured to store instructions, and when the instructions are executed by the processor, the apparatus is enabled to implement the method according to any one of the first aspect or the possible implementations of the first aspect.

According to a sixth aspect, an embodiment of this application provides an apparatus, including a processor. The processor is coupled to a memory, the memory is configured to store instructions, and when the instructions are executed by the processor, the apparatus is enabled to implement the method according to any one of the second aspect or the possible implementations of the second aspect.

According to a seventh aspect, an embodiment of this application provides a computer-readable storage medium. The computer-readable storage medium stores instructions, and when the instructions are executed, a computer is enabled to perform the method according to any one of the first aspect or the possible implementations of the first aspect.

According to an eighth aspect, an embodiment of this application provides a computer-readable storage medium. The computer-readable storage medium stores instructions, and when the instructions are executed, a computer is enabled to perform the method according to any one of the second aspect or the possible implementations of the second aspect.

According to a ninth aspect, an embodiment of this application provides a computer program product. The computer program product includes computer program code, and when the computer program code is run on a computer, the computer is enabled to perform the method according to any one of the first aspect or the possible implementations of the first aspect.

According to a tenth aspect, an embodiment of this application provides a computer program product. The computer program product includes computer program code, and when the computer program code is run on a computer, the computer is enabled to perform the method according to any one of the second aspect or the possible implementations of the second aspect.

According to an eleventh aspect, an embodiment of this application provides a chip, including a processor. The processor is coupled to a memory, the memory is configured to store instructions, and when the instructions are executed by the processor, the chip is enabled to implement the method according to any one of the first aspect, the second aspect, the possible implementations of the first aspect, or the possible implementations of the second aspect.

According to a twelfth aspect, an embodiment of this application provides a communication system, including the apparatus according to the third aspect and the apparatus according to the fourth aspect.

According to a thirteenth aspect, an embodiment of this application provides a communication system, including the apparatus according to the fifth aspect and the apparatus according to the sixth aspect.

### BRIEF DESCRIPTION OF DRAWINGS

FIG. 1 is a schematic diagram of a communication system to which an embodiment according to this application is applied;
FIG. 2 to FIG. 5 are schematic diagrams of several system frameworks to which embodiments of this application are applicable;
FIG. 6 is a schematic diagram of periodic data;
FIG. 7 is a schematic diagram of a data transmission method according to an embodiment of this application;
FIG. 8 and FIG. 9 are two schematic diagrams of CG transmission;
FIG. 10 and FIG. 11 are two schematic diagrams of transmitting active TB information according to embodiments of this application;
FIG. 12 is a schematic diagram of a structure of a terminal according to an embodiment of this application;
FIG. 13 is a schematic diagram of a structure of an apparatus according to an embodiment of this application; and
FIG. 14 is a schematic diagram of another apparatus according to an embodiment of this application.

### DESCRIPTION OF EMBODIMENTS

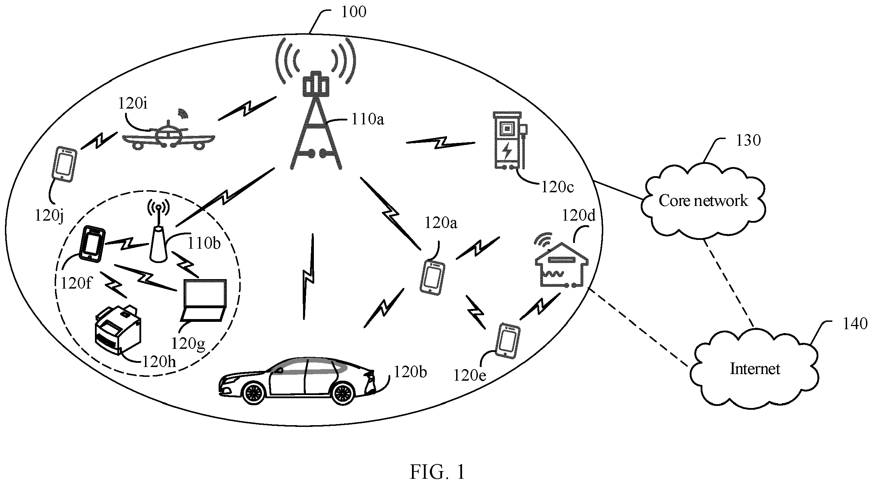

FIG. 1 is a schematic diagram of a structure of a communication system to which an embodiment of this application is applied. As shown in FIG. 1, the communication system includes a radio access network 100 and a core network 130. Optionally, the communication system 1000 may further include an internet 140. The radio access network 100 may include at least one radio access network device (for example, 110a and 110b in FIG. 1), and may further include at least one terminal (for example, 120a to 120j in FIG. 1). The terminal is wirelessly connected to the radio access network device, and the radio access network device is wirelessly or wiredly connected to the core network. A core network device and the radio access network device may be independent and different devices, or functions of the core network device and logical functions of the radio access network device are integrated into a same device, or some functions of the core network device and some functions of the radio access network device are integrated into one device. A wired or wireless manner may be used for connection between terminals and between radio access network devices. FIG. 1 is merely a schematic diagram. The communication system may further include another network device, for example, a relay device and a backhaul device, which are not shown in FIG. 1.

A method and an apparatus that are provided in embodiments of this application may be used in various communication systems, for example, a 4^{th} generation (4^{th} generation, 4G) communication system, a 4.5G communication system, a 5G communication system, a 5.5G communication system, a 6G communication system, a system integrating a plurality of communication systems, or a future evolved communication system. The various communication systems are, for example, a long term evolution (long term evolution, LTE) system, a new radio (new radio, NR) system, a wireless fidelity (wireless fidelity, Wi-Fi) system, a 3^{rd} generation partnership project (3^{rd} generation partnership project, 3GPP)-related communication system, and another communication system of this type.

The radio access network device (which is also referred to as a network device sometimes in this application) may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, an access node in the Wi-Fi system, or the like; or may be a module or a unit that completes some functions of a base station, for example, may be a central unit (central unit, CU) or a distributed unit (distributed unit, DU). The radio access network device may be a macro base station (for example, 110a in FIG. 1), or may be a micro base station or an indoor base station (for example, 110b in FIG. 1), or may be a relay node, a donor node, or the like. It may be understood that all or some functions of the radio access network device in this application may also be implemented by using a software function running on hardware, or may be implemented by using a virtualization function instantiated on a platform (for example, a cloud platform). A specific technology and a specific device form that are used by the radio access network device are not limited in embodiments of this application. For ease of description, the following provides descriptions by using an example in which the base station is used as the radio access network device.

The terminal may also be referred to as a terminal device, user equipment (user equipment, UE), a mobile station, a mobile terminal, or the like. The terminal may be widely applied to various scenarios, for example, device-to-device (device-to-device, D2D), vehicle to everything (vehicle to everything, V2X) communication, machine type communication (machine type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

Alternatively, the terminal in this application may be a VR terminal, an AR terminal, or an MR terminal. The VR terminal, the AR terminal, and the MR terminal each may be referred to as an XR terminal. For example, the XR terminal may be a head-mounted device (for example, a helmet or glasses), or may be an all-in-one machine, or may be a television, a display, a car, a vehicle-mounted device, a tablet, or a smart screen. The XR terminal can present XR data to users, and the users can experience diversified XR services by wearing or using the XR terminal. The XR terminal may access a network in the wireless or wired manner, for example, access the network via the Wi-Fi system, the 5G system, or another system.

The base station and the terminal may be fixed or movable. The base station and the terminal may be deployed on the land, including an indoor or outdoor scenario, and a handheld or vehicle-mounted scenario; or may be deployed on the water; or may be deployed on an airplane, a balloon, and an artificial satellite in the air. Application scenarios of the base station and the terminal are not limited in embodiments of this application.

Roles of the base station and the terminal are relative. For example, the airplane or uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal, that is, 110a and 120i communicate with each other by using a radio air interface protocol. Certainly, 110a and 120i may alternatively communicate with each other by using an interface protocol between base stations. In this case, for 110a, 120i is also a base station. Therefore, both the base station and the terminal may be collectively referred to as communication apparatuses. 110a and 110b in FIG. 1 may be referred to as communication apparatuses having functions of the base station, and 120a to 120j in FIG. 1 may be referred to as communication apparatuses having functions of the terminal.

Communication may be performed between the base station and the terminal, between the base stations, and between the terminals over a licensed spectrum, an unlicensed spectrum, or both the licensed spectrum and the unlicensed spectrum. Communication may be performed over a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the functions of the base station may alternatively be performed by a module (for example, a chip) in the base station, or may be performed by a control subsystem including the functions of the base station. The control subsystem that includes the functions of the base station herein may be a control center in the foregoing terminal application scenario, for example, the smart grid, industrial control, smart transportation, and the smart city. The functions of the terminal may alternatively be performed by a module (for example, a chip or a modem) in the terminal, or may be performed by an apparatus including the functions of the terminal.

In this application, the base station sends a downlink signal or downlink information to the terminal, where the downlink information is carried on a downlink channel; the terminal sends an uplink signal or uplink information to the base station, where the uplink information is carried on an uplink channel; and the terminal sends a sidelink (sidelink) signal or sidelink information to the terminal, where the sidelink information is carried on a sidelink channel.

An XR technology has advantages such as multiple views and strong interactivity to provide brand-new experience for users, and has great application value and business potential. XR includes VR, AR, MR, and other technologies, and can be widely used in entertainment, gaming, medical care, advertising, industry, online education, engineering, and other fields. The VR technology is mainly to render visual and audio scenarios to maximally simulate sensory stimulation of vision and audio in the real world to users. In the VR technology, users typically wear the XR terminal (for example, the head-mounted device) to simulate vision and/or hearing of the user. The VR technology may be further used to perform action tracking on users, to update simulated visual and/or auditory content in time. The AR technology is mainly to provide additional visual and/or auditory information or manually generated content in a real environment perceived by users. The users may directly (for example, sensing, processing, and rendering are not performed) or indirectly (for example, transferring is performed through a sensor or the like) perceive the real environment, and further enhancement processing is performed. The MR technology is to insert some virtual elements into a physical scenario, to provide immersive experience for users by adding these elements as a part of a real scenario.

An amount of XR data is generally large and dynamically changes. Therefore, how to efficiently transmit the XR data by properly using a limited radio resource is an urgent problem to be resolved.

This application provides a data transmission method. In the method, a maximum quantity of transport blocks (transport blocks, TBs) transmittable in a configured grant (configured grant, CG) periodicity is configured, so that a characteristic of XR data can be adapted, thereby completing efficient data transmission over a limited resource. It may be understood that the method provided in this application does not limit a data service type to which the method is applied, and a data service type as well as the XR data is also applicable.

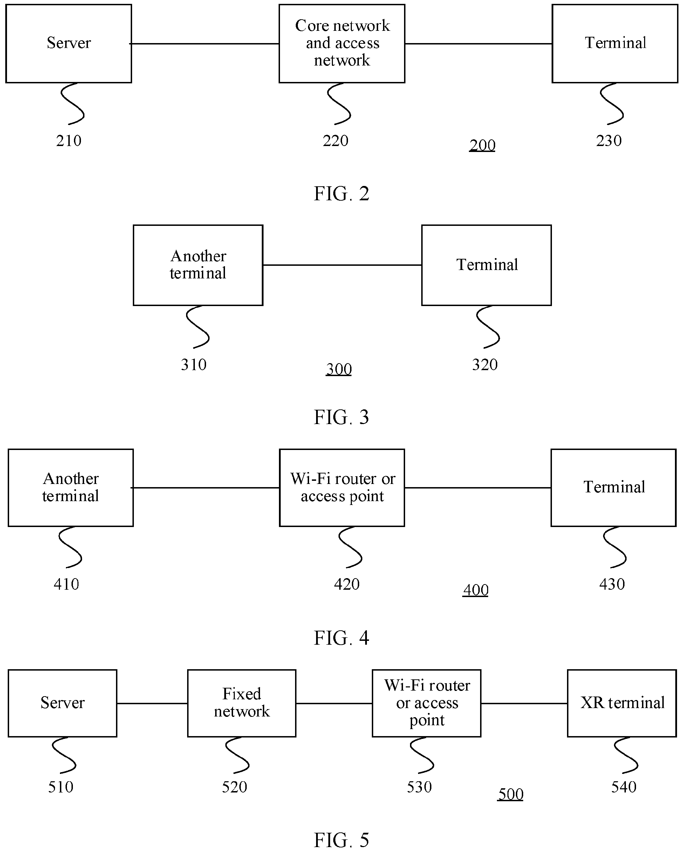

Embodiments provided in this application are applicable to a plurality of different scenarios. FIG. 2 to FIG. 5 are schematic diagrams of several system frameworks to which embodiments of this application are applicable.

FIG. 2 is a schematic diagram of a scenario to which an embodiment of this application is applicable. FIG. 2 shows a system 200, including a server 210, a core network and access network 220 (which may be briefly referred to as a transport network 220, for example, an LTE network, a 5G network, or a 6G network), and a terminal 230. The server 210 may be configured to: encode, decode, and render XR source data, the transport network 220 may be configured to transmit XR data, and the terminal 230 provides diversified XR experience for users by processing the XR data. It may be understood that another apparatus may be further included between the transport network 220 and the terminal 230. For example, another terminal (for example, a mobile phone, a notebook computer, or a vehicle-mounted terminal) and/or a network device (for example, a relay device, an integrated access backhaul (integrated access backhaul, IAB) device, a Wi-Fi router, or a Wi-Fi access point) may be further included. The terminal 230 obtains the XR data from the transport network 220 via the another terminal and/or the network device.

FIG. 3 is a schematic diagram of another scenario to which an embodiment of this application is applicable. FIG. 3 shows a system 300, including a terminal 320 and another terminal 310. The another terminal 310 is a terminal other than the terminal 320. The another terminal 310 may transmit XR data to the terminal 320. For example, the another terminal 310 may project the XR data to the terminal 320. For another example, the another terminal 310 and the terminal 320 are vehicle-mounted terminals, and the XR data may be exchanged between the vehicle-mounted terminals. It may be understood that the another terminal 310 may be further connected to a transport network (for example, an LTE network, a 5G network, or a 6G network), to obtain XR data from the transport network, or send data to the transport network.

FIG. 4 is a schematic diagram of another scenario to which an embodiment of this application is applicable. FIG. 4 shows a system 400, including a terminal 430, a Wi-Fi router or Wi-Fi access point 420 (which may be briefly referred to as a Wi-Fi apparatus 420), and another terminal 410. The another terminal 410 is a terminal other than the terminal 430. The another terminal 410 may transmit XR data to the terminal 430 via the Wi-Fi apparatus 420. For example, the another terminal 410 is a mobile phone device, the Wi-Fi apparatus 420 is the Wi-Fi router, the Wi-Fi access point, or a set-top box, and the terminal 430 is a television device, a smart screen device, or an electronic tablet device. The mobile phone device may project the XR data to the television device, the smart screen device, or the electronic tablet device via the Wi-Fi router, the Wi-Fi access point, or the set-top box, and present the XR data to users.

FIG. 5 is a schematic diagram of another scenario to which an embodiment of this application is applicable. FIG. 5 shows a system 500, including a server 510, a fixed network 520, a Wi-Fi router or Wi-Fi access point 530 (which may be briefly referred to as a Wi-Fi apparatus 530), and a terminal 540. The server 510 may be configured to: encode, decode, and render XR source data, and transmit XR data to the terminal 540 via the fixed network 520 and the Wi-Fi apparatus 530. For example, the fixed network 520 is an operator network, the Wi-Fi apparatus 530 is a Wi-Fi router, a Wi-Fi access point, or a set-top box, and the server 510 transmits or projects the XR data to the terminal 540 via the operator network 520 and the Wi-Fi apparatus 530.

It may be understood that FIG. 2 to FIG. 5 are merely examples of several scenarios to which embodiments of this application are applicable, and do not limit applicable scenarios of embodiments of this application.

The following describes technical solutions of this application with reference to the accompanying drawings.

In addition, for ease of understanding the technical solutions of this application, characteristics of an XR service or a video service and a CG mechanism are first briefly described.

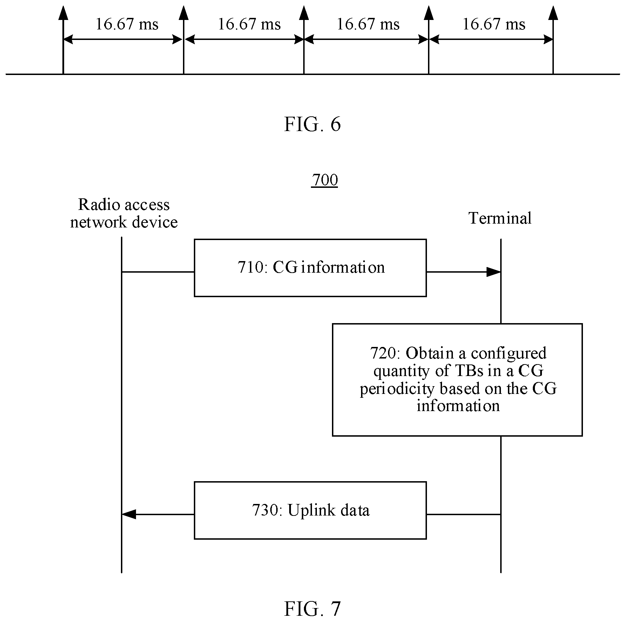

XR data or video service data usually has a specific frame rate and a specific periodicity. For example, FIG. 6 is a schematic diagram of distribution of picture frames of the XR service in terms of time when a frame rate is 60 frames per second (frames per second, FPS). It can be learned from FIG. 6 that, in the case of 60 FPS, one picture frame appears or arrives at a spacing of 1000/60≈16.67 ms.

Other possible frame rates further include 30 FPS, 90 FPS, and 120 FPS. A radio access network device may obtain the frame rate of the XR data or the video service data in a plurality of different manners.

For example, the radio access network device may obtain the frame rate of the XR data or the video service data by using configuration information of a quality of service (quality of service, QoS) flow corresponding to the data, for example, a QoS profile (QoS profile). For another example, the radio access network device may obtain the frame rate of the XR data or the video service data by detecting an arrival time interval of a data packet in a QoS flow. For another example, a terminal may report a frame rate of uplink data or information related to the frame rate to the radio access network device via assistance information, for example, an information element UEAssistanceInformation.

The terminal may also obtain the frame rate of the XR data or the video service data in a plurality of different manners.

For example, the terminal may obtain the frame rate of the XR data or the video service data via configuration information of a QoS flow corresponding to the data, for example, a QoS rule (QoS rule). For another example, the terminal may obtain the frame rate of the XR data or the video service data by detecting an arrival time interval of a data packet in a QoS flow. For another example, the terminal may notify, through interaction between protocol layers, a protocol layer (for example, an RRC layer) below an application layer of the terminal of a frame rate of application layer data or information related to the frame rate.

The configured grant (configured grant, CG) mechanism is a data transmission mechanism suitable for performing uplink periodic service transmission. In the CG mechanism, in an uplink data transmission process, a resource (which may also be referred to as a CG resource) used for uplink data transmission may be allocated to the terminal via an RRC message or downlink control information (downlink control information, DCI), so that the terminal can periodically and repeatedly use the allocated resource to perform uplink data transmission. The CG mechanism may also be sometimes referred to as a configured scheduling (configured scheduling, CS) mechanism or a grant free (grant free, GF) mechanism.

The CG mechanism includes two types: a CG type 1 and a CG type 2. The following separately describes working procedures of the two CG types.

### CG type 1

In the CG type 1, the radio access network device provides a CG-related configuration, for example, a CG periodicity and a CG resource, for the terminal via the RRC message. The RRC message is further used to activate the CG configuration. After receiving the RRC message, the terminal may send the uplink data to the radio access network device based on the CG periodicity and the CG resource that are configured via the RRC message.

In the CG type 1, the radio access network device sends the DCI to the terminal, to indicate the terminal to deactivate the CG configuration. After receiving the DCI, the terminal may release the CG resource, or it may be understood as stopping/suspending uplink data sending on the CG resource.

### CG type 2

In the CG type 2, the radio access network device provides a CG-related configuration, for example, a CG periodicity, for the terminal via the RRC message. The radio access network device further indicates a CG resource to the terminal via the DCI. After receiving the DCI, the terminal may send the uplink data to the radio access network device based on the CG periodicity configured via the RRC message and the CG resource indicated by the DCI. The DCI may also be understood as indicating and activating the CG resource.

In the CG type 2, the radio access network device sends another piece of DCI to the terminal, to indicate the terminal to deactivate the CG configuration. After receiving the DCI, the terminal may release the CG resource, or it may be understood as stopping/suspending uplink data sending on the CG resource.

In the CG mechanism (including the CG type 1 and the CG type 2), one CG resource is generally configured in one CG periodicity to transmit one transport block (transport block, TB). For a service having a high reliability requirement, for example, an ultra-reliable low-latency communication (ultra-reliable low-latency communication, URLLC) service, a plurality of CG resources may be configured in one CG periodicity, to transmit different redundancy versions (redundancy versions, RVs) of one TB, thereby improving data transmission reliability. The RV is designed to implement incremental redundancy (incremental redundancy, IR) hybrid automatic repeat request (hybrid automatic repeat request, HARQ) transmission. For example, bits generated through encoding are divided into several bit groups, each RV corresponds to one bit group, and bit groups corresponding to different RVs are used for initial transmission and retransmission, to gradually accumulate redundant bits, complete an IR HARQ operation, and improve data transmission reliability.

Transmission of different RVs of one TB may also be referred to as repeated transmission of the TB, or referred to as CG repeated transmission or physical uplink shared channel (physical uplink shared channel, PUSCH) repeated transmission. The radio access network device may configure a quantity of repeated transmissions in the CG periodicity for the terminal based on information about a quantity of repeated transmissions in the RRC message.

There are two types of PUSCH repeated transmission in the CG mechanism: a PUSCH repetition type A and a PUSCH repetition type B. The following separately describes the two PUSCH repetition types.

### PUSCH repetition type A

The PUSCH repetition type A may be understood as slot (slot)-based repeated transmission , to be specific, different RVs of one TB are transmitted in a plurality of consecutive or inconsecutive slots, and CG resource configurations in all the slots are the same.

### PUSCH repetition type B

The PUSCH repetition type B may be understood as mini-slot (mini-slot)-based repeated transmission, to be specific, different RVs of one TB are transmitted in a plurality of consecutive or inconsecutive mini-slots, and CG resource configurations in all the mini-slots are the same. For example, when one slot includes 14 symbols, one mini-slot includes two symbols or seven symbols. In addition, mini-slot-based repeated transmission may be performed in one slot, or may be performed across a plurality of slots.

As described above, the XR data or the video service data usually has a specific frame rate and a specific periodicity. Therefore, the CG mechanism is also suitable for transmitting the XR data or the video service data that has the periodicity. However, an amount of the XR data or the video service data is generally large and dynamically changes. Therefore, how to efficiently transmit the XR data or the video service data by properly using a limited radio resource is an urgent problem to be resolved.

This application provides a CG configuration method. A plurality of TBs may be configured to be transmitted in a CG periodicity, so that a CG mechanism can better adapt to transmission of XR data or video service data. It may be understood that the method provided in this application does not limit a data service type to which the method is applied, and a data service type other than the XR data and/or the video service data is also applicable.

FIG. 7 is a schematic interaction diagram of a CG configuration method 700 according to an embodiment of this application. In FIG. 7, the method is illustrated by using an example in which a radio access network device and a terminal interact with each other. However, an execution body of the interaction is not limited in this application. For example, the radio access network device in FIG. 7 may alternatively be a chip, a chip system, or a processor that supports the radio access network device in implementing the method, or may be a logical module or software that can implement all or some functions of the radio access network device. The terminal in FIG. 7 may alternatively be a chip, a chip system, or a processor that supports the terminal in implementing the method, or may be a logical module or software that can implement all or some functions of the terminal. As shown in FIG. 7, the method 700 in this embodiment may include a part 710, a part 720, and a part 730.

Part 710: The radio access network device sends CG information to the terminal, where the CG information is used to configure a configured quantity N of TBs in a CG periodicity, the configured quantity N of TBs is a maximum quantity of TBs transmittable in the CG periodicity, and N is an integer greater than 0. Correspondingly, the terminal receives the CG information from the radio access network device.

The TB in this application may also be understood as a PUSCH, a PUSCH transmission opportunity, a slot, or a time domain symbol that carries the TB. The quantity of TBs in this application may also be understood as a quantity of PUSCHs, PUSCH transmission opportunities, slots, or time domain symbols that carry the TBs.

Optionally, the CG information is carried in an RRC message. For example, the CG information may be a ConfiguredGrantConfig information element in the RRC message. It may be understood that ConfiguredGrantConfig is merely a possible name of the CG information, and the name of the CG information is not limited in this application.

Part 720: The terminal obtains the configured quantity N of TBs in the CG periodicity based on the CG information.

Part 730: The terminal sends, to the radio access network device in the CG periodicity, uplink data corresponding to M TB, where M is an integer greater than 0 and less than or equal to N. Correspondingly, the radio access network device receives, from the terminal in the CG periodicity, the uplink data corresponding to the M TB.

An XR video frame is generally large, and more TBs may be transmitted in one CG periodicity according to the method 700, so that complete transmission of the XR video frame can be completed in the CG periodicity, thereby improving user experience of receiving an XR service.

In the method 700, the CG information may be further used to configure duration of the CG periodicity. Correspondingly, in the part 720, the terminal may further obtain the duration of the CG periodicity based on the CG information.

In the method 700, the radio access network device sends the CG information to the terminal, to configure, for the terminal, the maximum quantity N of TBs transmittable in the CG periodicity. N may be configured in different implementations.

In a possible implementation of the CG information, the CG information includes information about the configured quantity of TBs, and the information about the configured quantity of TBs is used to configure the configured quantity N of TBs. Correspondingly, in the part 720, the terminal obtains the configured quantity N of TBs based on the information about the configured quantity of TBs.

For example, the CG information is a ConfiguredGrantConfig information element in the RRC message, and the ConfiguredGrantConfig information element includes a cg-maxNrofTB information element. The cg-maxNrofTB information element is the information about the configured quantity of TBs, and is used to configure the configured quantity N of TBs. The terminal obtains the configured quantity N of TBs based on the cg-maxNrofTB information element. For example, the ConfiguredGrantConfig information element and the cg-maxNrofTB information element may be shown in the following table.

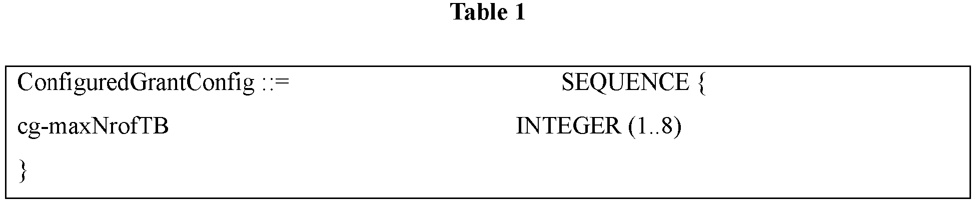

In the foregoing table, an example in which a value represented by the cg-maxNrofTB information element is 1, 2, ..., or 8 is used for illustration. The information element represents that a possible value of the configured quantity N of TBs is 1, 2, ..., or 8, in other words, represents that the maximum quantity of TBs transmittable in the CG periodicity is 1, 2, ..., or 8. It may be understood that, the foregoing table is merely an example in which the value represented by the cg-maxNrofTB information element is 1, 2, ..., or 8, and a case in which there may be another value is not excluded. In addition, cg-maxNrofTB is merely a possible information element name of the information about the configured quantity of TBs. The information element name of the information about the configured quantity of TBs is not limited in this application. It may be understood that the ConfiguredGrantConfig information element may further include another information element used to configure a CG.

In the foregoing implementation of the CG information, the maximum quantity of TBs transmittable in the CG periodicity may be configured by using a dedicated field or information element in the CG information. Because a value range of the dedicated field or information element may be specially designed to implement the configuration of the maximum quantity of TBs transmittable in the CG periodicity, the configuration of the maximum quantity of TBs transmittable in the CG periodicity can be more targeted.

In another possible implementation of the CG information, the CG information includes configuration information of repeated transmission and information about a quantity of repeated transmissions, and the configuration information of repeated transmission and the information about the quantity of repeated transmissions are used to configure the configured quantity N of TBs. Correspondingly, in the part 720, the terminal obtains the configured quantity N of TBs based on the configuration information of repeated transmission and the information about the quantity of repeated transmissions. This implementation may be understood as reusing the information about the quantity of repeated transmissions in the CG information, to configure the maximum quantity of TBs transmittable in the CG periodicity. The configuration information of repeated transmission may be understood as a function for configuring the information about the quantity of repeated transmissions. When the configuration information of repeated transmission is set to a preset value, the information about the quantity of repeated transmissions is used to configure the maximum quantity of TBs transmittable in the CG periodicity. When the configuration information of repeated transmission is set to another preset value, the information about the quantity of repeated transmissions is used to configure the quantity of repeated transmissions in the CG periodicity.

Optionally, when the configuration information of repeated transmission is set to a preset value A1, the information about the quantity of repeated transmissions is used to configure the maximum quantity N of TBs transmittable in the CG periodicity. Correspondingly, the terminal obtains N based on the information about the quantity of repeated transmissions. Alternatively, it may be understood as that when the configuration information of repeated transmission is set to a preset value A1, the information about the quantity of repeated transmissions is used to configure non-repeated transmission in the CG periodicity.

Optionally, when the configuration information of repeated transmission is set to a preset value A2, the information about the quantity of repeated transmissions is used to configure the quantity of repeated transmissions in the CG periodicity. Alternatively, it may be understood as that when the configuration information of repeated transmission is set to a preset value A2, the information about the quantity of repeated transmissions is used to configure repeated transmission in the CG periodicity.

For example, the CG information is a ConfiguredGrantConfig information element in the RRC message, and the ConfiguredGrantConfig information element includes a cg-repIndicator information element and a repK information element. The cg-repIndicator information element is the configuration information of repeated transmission, and the repK information element is the information about the quantity of repeated transmissions. For example, the ConfiguredGrantConfig information element, the cg-maxNrofTB information element, and the repK information element may be shown in the following table.

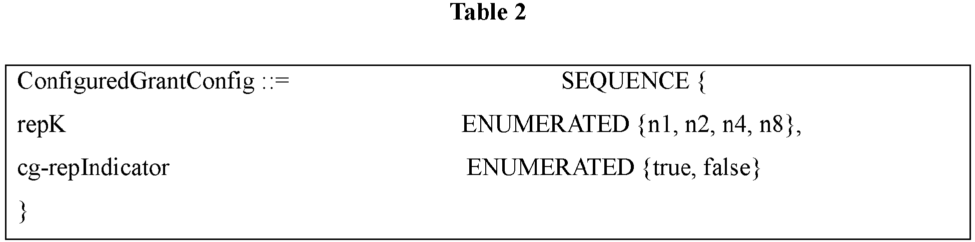

In the foregoing table, an example in which a value represented by the cg-repIndicator information element is an enumerated value being "true" or "false" is used. The value represented by the cg-repIndicator information element may alternatively be a Boolean value being "true" or "false" (for example, represented as "cg-repIndicator BOOL {true, false}").

For example, "true" may be used as the preset value A1, and "false" may be used as the preset value A2. When the cg-repIndicator information element is set to "true", the repK information element is used to configure the maximum quantity N of TBs transmittable in the CG periodicity. When the cg-repIndicator information element is set to "false", the repK information element is used to configure the quantity of repeated transmissions in the CG periodicity.

For another example, "false" may be used as the preset value A1, and "true" may be used as the preset value A2. When the cg-repIndicator information element is set to "false", the repK information element is used to configure the maximum quantity N of TBs transmittable in the CG periodicity. When the cg-repIndicator information element is set to "true", the repK information element is used to configure the quantity of repeated transmissions in the CG periodicity.

In the foregoing table, an example in which a value represented by the repK information element is an enumerated value being n1, n2, n4, or n8 is used for illustration. When the repK information element is used to configure the maximum quantity N of TBs transmittable in the CG periodicity, n1 indicates that the maximum quantity N of TBs transmittable in the CG periodicity is 1, n2 indicates that the maximum quantity N of TBs transmittable in the CG periodicity is 2, n4 indicates that the maximum quantity N of TBs transmittable in the CG periodicity is 4, and n8 indicates that the maximum quantity N of TBs transmittable in the CG periodicity is 8. When the repK information element is used to configure the quantity of repeated transmissions in the CG periodicity, n1 indicates that the quantity of repeated transmissions in the CG periodicity is 1, n2 indicates that the quantity of repeated transmissions in the CG periodicity is 2, n4 indicates that the quantity of repeated transmissions in the CG periodicity is 4, and n8 indicates that the quantity of repeated transmissions in the CG periodicity is 8.

It may be understood that, the foregoing table is merely an example in which the value represented by the cg-repIndicator information element is "true" or "false" and the value represented by the repK information element is n1, n2, n4, or n8, and a case in which there may be another value is not excluded. In addition, cg-repIndicator and repK are merely possible information element names of the configuration information of repeated transmission and the information about the quantity of repeated transmissions. The information element names of the configuration information of repeated transmission and the information about the quantity of repeated transmissions are not limited in this application. It may be understood that the ConfiguredGrantConfig information element may further include another information element used to configure a CG.

In the foregoing implementation of the CG information, the information about the quantity of repeated transmissions in the CG information may be reused to configure the maximum quantity of TBs transmittable in the CG periodicity, to reduce overheads of the configuration information.

Before configuration information of the CG is reconfigured or updated, a size of a CG resource is generally unchanged. However, XR data or video service data is characterized by a dynamic change, and the CG resource with a fixed size may not match the characteristic of the XR data or the video service data. If the configured CG resource is sufficient, although a transmission requirement of the XR data or the video service data can be met, a waste of resources is caused and resource utilization is reduced. If the configured CG resource is insufficient, although resource utilization can be improved, a data transmission delay may be increased, and consequently a transmission requirement of the XR data or the video service data cannot be met.

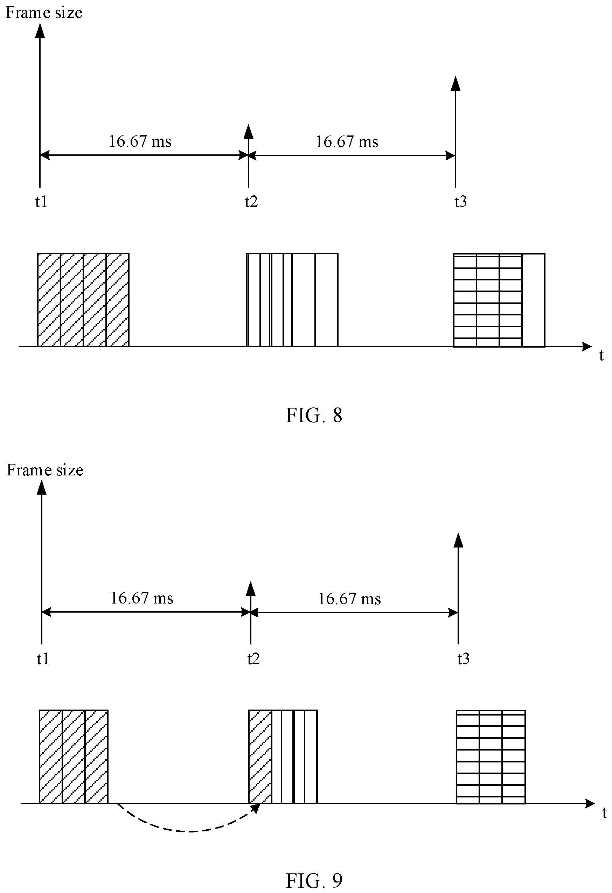

FIG. 8 is used as an example to show distribution of picture frames of an XR service whose frame rate is 60 FPS in terms of time. One picture frame appears or arrives at a spacing of 1000/60≈16.67 ms, and frame sizes of picture frames at different moments are different. A frame size of a picture frame at a moment t1 is largest, a frame size of a picture frame at a moment t2 is smallest, and a frame size of a picture frame at a moment t2 is in the middle. The CG resource is configured based on the largest frame size of the picture frame. As shown in FIG. 8, the maximum quantity N of TBs transmittable by using the configured CG resource in the CG periodicity is 4. In this case, except that picture frame data at the moment t1 may occupy all CG resources in the CG periodicity, picture frame data at the moment t2 or picture frame data at the moment t3 does not occupy all CG resources in the corresponding CG periodicity. In the figure, different shadows are used to represent CG resource occupation of the picture frame data at different moments. It can be learned that, when the configured CG resource is sufficient, although the transmission requirement of the XR data or the video service data can be met, the waste of resources is caused and the resource utilization is reduced.

In addition, for a CG resource that does not carry data in FIG. 8, the radio access network device may mistakenly consider that the terminal performs transmission on the resource, but the transmission fails. In this case, the radio access network device indicates, by using scheduling information, the terminal to perform data retransmission. This causes unnecessary signaling overheads, and the terminal further needs to monitor the scheduling information. Consequently, power consumption of the terminal is increased.

FIG. 9 is used as an example, and also shows distribution of picture frames of an XR service the same as that in FIG. 8 in terms of time and frame sizes. As shown in FIG. 9, the maximum quantity N of TBs transmittable by using the configured CG resource in the CG periodicity is 3. In this case, the CG resource in the CG periodicity shown in FIG. 9 is insufficient to completely transmit picture frame data at a moment 11. Therefore, a part of the picture frame data at the moment t1 is delayed to be transmitted in a next CG periodicity, resulting in an increase of a delay and deterioration of user experience.

To resolve the foregoing problem, optionally, the method 700 may further include: The terminal sends uplink control information (uplink control information, UCI) to the radio access network device, where the UCI indicates M, to be specific, the UCI indicates, to the radio access network device, a quantity of TBs actually sent by the terminal to the radio access network device in the CG periodicity. Correspondingly, the radio access network device receives the UCI from the terminal, and obtains M based on the UCI. Optionally, the UCI is configured grant UCI (CG-UCI), and the CG-UCI is used by the terminal to send CG-related control information to the radio access network device. Optionally, the UCI may be carried on the PUSCH, or may be carried on a physical uplink control channel (physical uplink control channel, PUCCH).

According to the foregoing method, the radio access network device may learn of the quantity of TBs actually transmitted by the terminal in the CG periodicity, so that the radio access network device can schedule, to another terminal for use, a CG resource that is not occupied by the terminal in the CG periodicity, to avoid the waste of resources and improve the resource utilization. In addition, according to the foregoing method, for the CG resource that is not occupied by the terminal, the radio access network device does not mistakenly consider that the terminal fails to perform transmission on the CG resource. Therefore, the radio access network device does not need to send the scheduling information to the terminal to indicate data retransmission, to avoid unnecessary signaling overheads.

In a possible implementation of the UCI, the UCI includes active TB information, and the active TB information indicates, to the radio access network device, the quantity M of TBs actually transmitted by the terminal in the CG periodicity. Correspondingly, the radio access network device obtains M based on the active TB information. Optionally, the UCI may further include one or more of the following information: HARQ information, RV information, new data indicator (new data indicator, NDI) information, or channel occupancy time (channel occupancy time, COT) sharing information. The HARQ information indicates a HARQ process number corresponding to uplink data transmission, the RV information indicates an RV corresponding to uplink data transmission, the NDI information indicates whether uplink data transmission is new data, and the COT sharing information indicates channel occupation time information in an unlicensed frequency band communication scenario.

In a possible implementation of the active TB information, the active TB information is information about a quantity of active TBs, and the information about the quantity of active TBs indicates, to the radio access network device, the quantity M of TBs actually transmitted by the terminal in the CG periodicity. Correspondingly, the radio access network device obtains M based on the information about the quantity of active TBs.

Optionally, the UCI includes a cg-ActiveTB field, and information carried in the cg-ActiveTB field is the information about the quantity of active TBs. A quantity of bits of the cg-ActiveTB field may be related to a quantity of possible values of N. For example, when the possible value of N is {1, 2, ..., 8} (where there are eight possible values in total), the quantity of bits of the cg-ActiveTB field may be log₂(8)=3. When the possible value of N is {1, 2, ..., 16} (where there are 16 possible values in total), the quantity of bits of the cg-ActiveTB field may be log₂(16)=4. When the possible value of N is {1, 2, 4, 8} (where there are four possible values in total), the quantity of bits of the cg-ActiveTB field may be log₂(4)=2. It may be understood that cg-ActiveTB is merely a possible field name of the information about the quantity of active TBs, and the field name of the information about the quantity of active TBs is not limited in this application.

In another possible implementation of the active TB information, the active TB information is information about an active TB bitmap (bitmap), and the information about the active TB bitmap indicates, to the radio access network device, the quantity M of TBs actually transmitted by the terminal in the CG periodicity. Correspondingly, the radio access network device obtains M based on the information about the active TB bitmap.

Optionally, the UCI includes a cg-ActiveTBBitmap field, and information carried in the cg-ActiveTBBitmap field is the information about the active TB bitmap. A quantity of bits of the cg-ActiveTBBitmap field may be related to a quantity of possible values of N. For example, when the possible value of N is {1, 2, ..., 8} (where there are eight possible values in total), the quantity of bits of the cg-ActiveTBBitmap field may be 8. When the possible value of N is {1, 2, ..., 16} (where there are 16 possible values in total), the quantity of bits of the cg-ActiveTBBitmap field may be 16. When the possible value of N is {1, 2, 4, 8} (where there are four possible values in total), the quantity of bits of the cg-ActiveTBBitmap field may be 4. A value of M is equal to a quantity of bits of" 1" in the cg-ActiveTBBitmap field; or a value of M is equal to a quantity of bits of "0" in the cg-ActiveTBBitmap field. It may be understood that cg-ActiveTBBitmap is merely a possible field name of the information about the active TB bitmap, and the field name of the information about the active TB bitmap is not limited in this application.

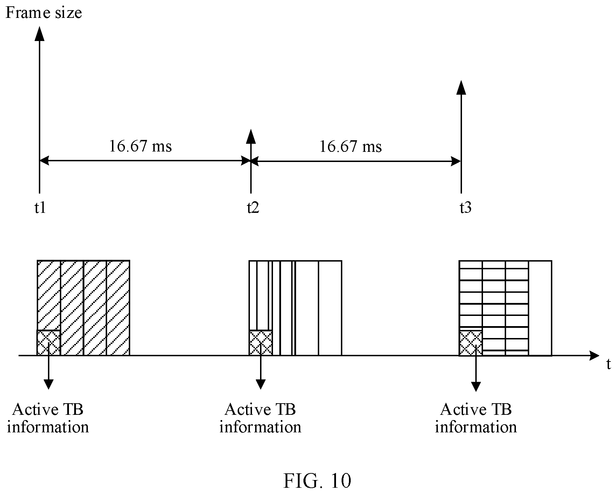

FIG. 10 is used as an example to describe a transmission manner of the active TB information. FIG. 10 shows distribution of picture frames of an XR service whose frame rate is 60 FPS in terms of time. One picture frame appears or arrives at a spacing of 16.67 ms, and frame sizes of picture frames at different moments are different. A frame size of a picture frame at a moment t1 is largest, a frame size of a picture frame at a moment t2 is smallest, and a frame size of a picture frame at a moment t2 is in the middle. The CG resource is configured based on the largest frame size of the picture frame. In this case, except that picture frame data at the moment t1 may occupy all CG resources in the CG periodicity, picture frame data at the moment t2 or picture frame data at the moment t3 does not occupy all CG resources in the corresponding CG periodicity. In the figure, different shadows are used to represent CG resource occupation of the picture frame data at different moments and the active TB information.

To enable the radio access network device to learn of the quantity M of TBs actually transmitted by the terminal in the CG periodicity, when sending the uplink data to the radio access network in each CG periodicity (where duration of the CG periodicity shown in the figure is 16.67 ms), the terminal also sends the active TB information to the radio access network device. In a 1^{st} CG periodicity, the active TB information indicates that the quantity M of TBs actually transmitted in the CG periodicity is 4. In a 2^{nd} CG periodicity, the active TB information indicates that the quantity M of TBs actually transmitted in the CG periodicity is 2. In a 3^{rd} CG periodicity, the active TB information indicates that the quantity M of TBs actually transmitted in the CG periodicity is 3.

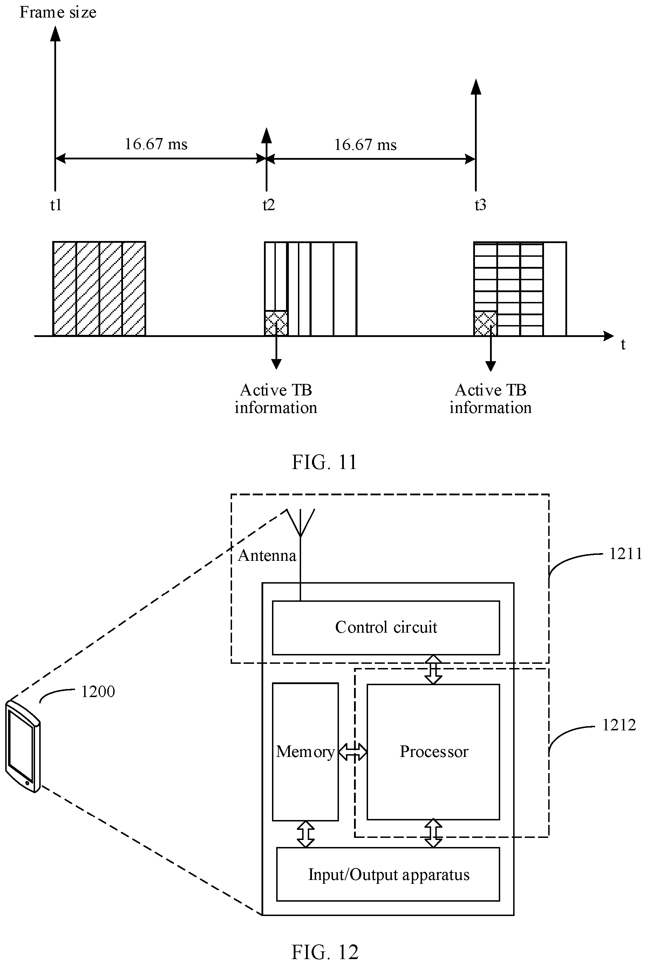

FIG. 11 is used as an example to describe another transmission manner of the active TB information. FIG. 11 also shows distribution of picture frames of an XR service the same as that in FIG. 10 in terms of time and frame sizes. Different from the transmission manner shown in FIG. 10, in the transmission manner shown in FIG. 11, when the quantity M of TBs actually transmitted in the CG periodicity is equal to the maximum quantity N of TBs transmittable in the CG periodicity, the terminal does not send the active TB information. When the radio access network device receives no active TB information, it can be learned that M=N.

It may be understood that resource locations occupied by the active TB information in FIG. 10 and FIG. 11 are merely used as examples, and the active TB information may alternatively occupy other resource locations. This is not limited in this application.

In a possible implementation in which the terminal sends the UCI to the radio access network device, the terminal sends, to the radio access network device in a first time unit, the UCI indicating M. The first time unit may be one or more slots, or may be one or more time domain symbols. A time unit corresponding to a 1^{st} TB may be understood differently. For example, the time unit corresponding to the 1^{st} TB may be understood as a slot or a time domain symbol corresponding to the 1^{st} TB in the N TBs configured in the CG periodicity, or may be understood as a slot or a time domain symbol corresponding to the 1^{st} TB in the N TBs configured in the CG periodicity after data arrives. In this implementation, the network device may learn of, as early as possible via the UCI, the quantity M of TBs actually sent in the CG periodicity, to allocate an unused slot resource to another terminal for use, and avoid a waste of resources.

When a specific condition is met, the terminal may send, to the radio access network device in the first time unit, the UCI indicating M.

In a possible implementation, when the following condition 1 is met, the terminal sends the UCI to the radio access network device in the first time unit.

Condition 1: An interval between a second time unit and the first time unit is greater than a first threshold.

The second time unit is a time unit corresponding to an N^{th} TB in the configured N TBs. The second time unit may be one or more slots, or may be one or more time domain symbols. The time unit corresponding to the N^{th} TB may be understood as a slot or a time domain symbol corresponding to the N^{th} TB (namely, a last TB) in the N TBs configured in the CG periodicity.

The first threshold is predefined, or is configured by the radio access network device.

When the first threshold is predefined, the first threshold may be a value pre-specified in a protocol.

When the first threshold is configured by the radio access network device, the radio access network device may configure the first threshold via an information element in the RRC message. The information element in the RRC message used to configure the first threshold may be a newly defined information element, or an existing information element may be reused. For example, a cg-minDFI-Delay information element may be reused to configure the first threshold, where cg-minDFI-Delay represents a minimum time interval from an end symbol of a PUSCH to a start symbol of a PDCCH including a downlink feedback indicator (downlink feedback indicator, DFI) that carries a HARQ-ACK corresponding to the PUSCH. The first threshold may alternatively be jointly determined by two or more information elements/parameters. For example, the first threshold may be determined based on both a value C1 configured by using the cg-minDFI-Delay information element and a value of K2. K2 represents a minimum time interval from receiving, by the terminal, downlink scheduling information carried in downlink control information (downlink control information, DCI) to sending the uplink data on a PUSCH scheduled via the downlink scheduling information. For example, the first threshold may be represented as C1+K2. The value of K2 may be indicated by the downlink scheduling information (for example, may be indicated by a "minimum applicable scheduling offset indicator" field in the downlink scheduling information), or may be configured by the radio access network device by using an information element in the RRC message (for example, may be configured by using a minimumSchedulingOffsetK2 information element).

In the foregoing implementation, the terminal device may learn of a processing delay of the network device. When a remaining resource in the CG periodicity cannot be used to schedule another terminal due to an excessively large processing delay of the network device, the terminal device does not need to send the UCI, to reduce signaling overheads.

In another possible implementation, when the following condition 2 is met, the terminal sends the UCI to the radio access network device in the first time unit.

Condition 2: An amount of to-be-transmitted data is greater than a second threshold.

The amount of to-be-transmitted data may be an amount of to-be-transmitted data corresponding to a logical channel corresponding to a CG. The CG may be a CG configured by using the CG information. The second threshold may be a total amount of data that the configured N TBs is capable of carrying.

In the foregoing implementation, when the configured N TBs cannot carry the amount of to-be-transmitted data, it indicates that a configured resource is insufficient. In this case, the network device is notified via the UCI, and the network device may allocate an additional transmission resource based on the UCI, to transmit remaining data in time, and reduce a transmission delay.

To resolve the problem shown in FIG. 8 or FIG. 9, optionally, the method 700 may further include: The terminal sends a media access control (media access control, MAC) control element (control element, CE) to the radio access network device, where the MAC CE indicates at least one of the following: M or a buffer size (buffer size). The MAC CE may be used to report at least one of M or the buffer size to the radio access network device based on a logical channel (logical channel, LCH) or a logical channel group (logical channel group, LCG), where one LCG includes one or more LCHs. The buffer size may also be understood as an amount of to-be-transmitted data of the terminal.

When the MAC CE is used to report at least one of M or the buffer size to the radio access network device based on the LCH, the MAC CE includes an identifier of the LCH, and further includes information indicating at least one of M or the buffer size. The identifier of the LCH may be, for example, an LCH ID, the information indicating M may be, for example, carried in the cg-ActiveTB field, and the information indicating the buffer size may be, for example, carried in a Buffer Size field. In this implementation, the network device may learn of information about at least one of a quantity M of actually sent TBs or a buffer size corresponding to a specific LCH, so that the network device can perform more fine-grained scheduling (for example, scheduling at an LCH granularity), to improve resource utilization.

When the MAC CE is used to report at least one of M or the buffer size to the radio access network device based on the LCG, the MAC CE includes an identifier of the LCG, and further includes information indicating at least one of M or the buffer size. The identifier of the LCG may be, for example, an LCG ID, the information indicating M may be, for example, carried in the cg-ActiveTB field, and the information indicating the buffer size may be, for example, carried in a Buffer Size field. When the MAC CE indicates the buffer size, the radio access network device may learn of the amount of to-be-transmitted data of the terminal. Because the radio access network device also learns of an amount of data that can be carried by each of the N TBs configured for the terminal in the CG periodicity, the radio access network device may determine the quantity M of TBs actually required by the terminal for transmission in the CG periodicity. If M<N, the radio access network device may allocate, to another terminal for use, a resource (for example, a PUSCH, a PUSCH transmission opportunity, a slot, or a time domain symbol) corresponding to at least one of N-M TB. If M>N, the radio access network device may additionally allocate more resources to the terminal for data transmission. In this implementation, the network device may reuse an existing buffer status report (buffer size report, BSR) mechanism to report information about at least one of a quantity M of actually sent TBs or a buffer size corresponding to the LCG, to provide a reference for scheduling of the network device, and improve resource utilization.

It may be understood that cg-ActiveTB and Buffer Size are merely possible names of the information indicating M and the information indicating the buffer size in the MAC CE. This is not limited in this application.

In a possible implementation in which the terminal sends the MAC CE to the radio access network device, the terminal sends, to the radio access network device in the first time unit, the MAC CE indicating at least one of M or the buffer size. For descriptions of the first time unit and the time unit corresponding to the 1^{st} TB, refer to the foregoing descriptions. Details are not described herein again. In this implementation, the terminal may notify, as early as possible via the MAC CE, the network device of the quantity M of TBs actually sent in the CG periodicity, so that the network device can learn of M in time, to allocate, based on the actual quantity of TBs, an unused resource to another terminal for use, thereby avoiding a waste of resources.

When a specific condition is met, the terminal may send, to the radio access network device in the first time unit, the MAC CE indicating at least one of M or the buffer size.

In a possible implementation, when the foregoing condition 1 is met, the terminal sends the MAC CE to the radio access network device in the first time unit. For descriptions of the condition 1, refer to the foregoing descriptions. Details are not described herein again. In this implementation, when a remaining resource in the CG periodicity cannot be used to schedule another terminal due to an excessively large processing delay of the network device, the terminal does not need to send the MAC CE, to reduce signaling overheads.

In another possible implementation, when the foregoing condition 2 is met, the terminal sends the MAC CE to the radio access network device in the first time unit. For descriptions of the condition 2, refer to the foregoing descriptions. Details are not described herein again. In this implementation, when the configured N TBs cannot carry the amount of to-be-transmitted data, it indicates that a configured resource is insufficient. In this case, the network device is notified via the MAC CE, and the network device may allocate an additional transmission resource based on the MAC CE, to transmit remaining data in time, and reduce a transmission delay.

In another possible implementation, when the following condition 3 is met, the terminal sends the MAC CE to the radio access network device in the first time unit.

Condition 3: A preset parameter is received or the preset parameter is set to a preset value.

When the MAC CE is used to report at least one of M or the buffer size to the radio access network device based on the LCH, the preset parameter may be, for example, represented as enhanced-per-LCH-BSR. In a possible implementation method, when receiving enhanced-per-LCH-BSR, the terminal sends the MAC CE to the radio access network device in the first time unit. In another possible implementation method, when enhanced-per-LCH-BSR is set to the preset value, the terminal sends the MAC CE to the radio access network device in the first time unit. The preset value may be, for example, "true", "enable", "0", or "1".

When the MAC CE is used to report at least one of M or the buffer size to the radio access network device based on the LCG, the preset parameter may be, for example, represented as enhanced-cg-BSR. In a possible implementation method, when receiving enhanced-cg-BSR, the terminal sends the MAC CE to the radio access network device in the first time unit. In another possible implementation method, when enhanced-cg-BSR is set to the preset value, the terminal sends the MAC CE to the radio access network device in the first time unit. The preset value may be, for example, "true", "enable", "0", or "1".

It may be understood that enhanced-per-LCH-BSR and enhanced-cg-BSR are merely possible names of the preset parameter. This is not limited in this application.

In the foregoing implementation, the terminal device may determine, based on configuration information of the network device, whether it is necessary to send indication information to the network device, to avoid an invalid signaling indication and a waste of resources.

In another possible implementation, when the foregoing condition 1 and condition 3 are met, the terminal sends the MAC CE to the radio access network device in the first time unit. For descriptions of the condition 1 and the condition 3, refer to the foregoing descriptions. Details are not described herein again. In this implementation, the terminal device may determine, based on information such as configuration information of the network device and data arrival time, whether it is necessary to send indication information to the network device, to avoid an invalid signaling indication and a waste of resources.

In another possible implementation, when the foregoing condition 2 and condition 3 are met, the terminal sends the MAC CE to the radio access network device in the first time unit. For descriptions of the condition 2 and the condition 3, refer to the foregoing descriptions. Details are not described herein again. In this implementation, the terminal device may determine, based on information such as configuration information of the network device and the amount of to-be-transmitted data, whether it is necessary to send indication information to the network device, to avoid an invalid signaling indication and a waste of resources.

Corresponding to the method provided in the foregoing method embodiments, embodiments of this application further provide a corresponding apparatus, including corresponding modules configured to execute the foregoing embodiments. The module may be software, hardware, or a combination of software and hardware.

FIG. 12 is a schematic diagram of a structure of a terminal. The terminal is applicable to the scenario shown in FIG. 1, FIG. 2, FIG. 3, FIG. 4, or FIG. 5. The terminal or a component in the terminal may perform the foregoing method 700 and various possible implementations. For ease of description, FIG. 12 shows only main components of the terminal. As shown in FIG. 12, the terminal 1200 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and the data. A radio frequency circuit is mainly configured to: perform conversion between a baseband signal and a radio frequency signal, and process the radio frequency signal. The antenna is mainly configured to: receive and send a radio frequency signal in a form of an electromagnetic wave. The input/output apparatus, for example, a touchscreen, a display, or a keyboard, is mainly configured to: receive data input by a user and output data to the user.

After the terminal is powered on, the processor may read the software program in the storage unit, interpret and execute instructions of the software program, and process data of the software program. When data needs to be sent wirelessly, the processor performs baseband processing on the to-be-sent data, and outputs a baseband signal to the radio frequency circuit. The radio frequency circuit processes the baseband signal to obtain a radio frequency signal, and sends the radio frequency signal to the outside in the form of the electromagnetic wave through the antenna. When data is sent to the terminal, the radio frequency circuit receives the radio frequency signal through the antenna, further converts the radio frequency signal into the baseband signal, and outputs the baseband signal to the processor. The processor converts the baseband signal into the data, and processes the data.

For ease of description, FIG. 12 shows only one memory and one processor. In an actual terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 12. A person skilled in the art may understand that the baseband processor and the central processing unit may each be an independent processor, and are interconnected by using a technology such as a bus. A person skilled in the art may understand that the terminal may include a plurality of baseband processors to adapt to different network standards, and the terminal may include a plurality of central processing units to enhance a processing capability of the terminal. All of the components of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of the software program, and the processor executes the software program to implement a baseband processing function.

In an example, an antenna and a control circuit that have receiving and sending functions may be considered as a transceiver unit 1211 of the terminal 1200, and a processor that has a processing function may be considered as a processing unit 1212 of the terminal 1200. As shown in FIG. 12, the terminal 1200 includes the transceiver unit 1211 and the processing unit 1212. The transceiver unit may also be referred to as a transceiver machine, a transceiver, a transceiver apparatus, or the like. Optionally, a component that is in the transceiver unit 1211 and that is configured to implement a receiving function may be considered as a receiving unit, and a component that is in the transceiver unit 1211 and that is configured to implement a sending function may be considered as a sending unit. That is, the transceiver unit 1211 includes the receiving unit and the sending unit. For example, the receiving unit may also be referred to as a receiver, a receive machine, or a receiving circuit, and the sending unit may also be referred to as a transmitter, a transmitter machine, or a transmitter circuit. Optionally, the receiving unit and the sending unit may be one integrated unit, or may be a plurality of independent units. The receiving unit and the sending unit may be in one geographical position, or may be distributed in a plurality of geographical positions.

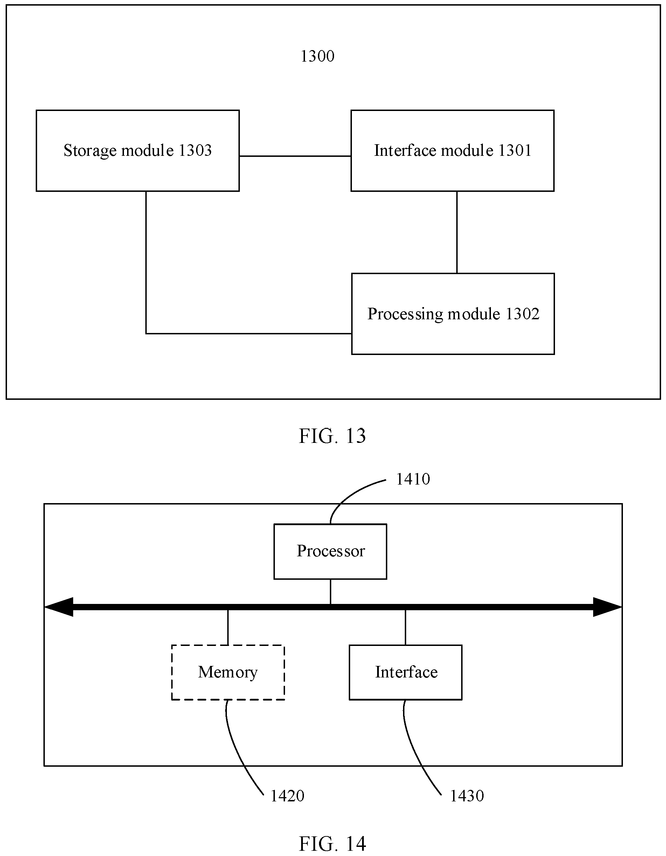

As shown in FIG. 13, another embodiment of this application provides an apparatus 1300. The apparatus may be a terminal, or may be a component (for example, an integrated circuit or a chip) of the terminal. Alternatively, the apparatus may be a radio access network device, a component (for example, an integrated circuit or a chip) of the network device, or a logical module or software that can implement all or some functions of the radio access network device. The apparatus may alternatively be another communication module. For example, the apparatus 1300 may implement the function of the radio access network device in the method 700, or the apparatus 1300 may implement the function of the terminal in the method 700. The apparatus 1300 may include: an interface module 1301 (or referred to as an interface unit). Optionally, the apparatus may further include a processing module 1302 (or referred to as a processing unit) and a storage module 1303 (or referred to as a storage unit).

In a possible design, one or more modules in FIG. 13 may be implemented by one or more processors, or may be implemented by one or more processors and memories, or may be implemented by one or more processors and transceivers, or may be implemented by one or more processors, memories, and transceivers. This is not limited in this embodiment of this application. The processor, the memory, and the transceiver may be disposed separately, or may be integrated.

The apparatus has a function of implementing the terminal described in embodiments of this application. For example, the apparatus includes a corresponding module, unit, or means (means) used by the terminal to perform the steps that are related to the terminal and that are described in embodiments of this application. The function, the unit, or the means (means) may be implemented by software or hardware, implemented by hardware executing corresponding software, or implemented by a combination of software and hardware. For details, further refer to the corresponding descriptions in the foregoing corresponding method embodiments. Alternatively, the apparatus has a function of implementing the radio access network device described in embodiments of this application. For example, the apparatus includes a corresponding module, unit, or means (means) used by the radio access network device to perform the steps that are related to the radio access network device and that are described in embodiments of this application. The function, the unit, or the means (means) may be implemented by software or hardware, implemented by hardware executing corresponding software, or implemented by a combination of software and hardware. For details, further refer to the corresponding descriptions in the foregoing corresponding method embodiments.

In a possible design, the apparatus 1300 includes the processing module 1302 and the interface module 1301. The interface module 1301 is configured to receive CG information from the network device. The processing module 1302 is configured to obtain a configured quantity N of TBs in a CG periodicity based on the CG information, where the configured quantity N of TBs is a maximum quantity of TBs transmittable in the CG periodicity, and N is an integer greater than 0. The interface module 1301 is further configured to send, to the network device in the CG periodicity, uplink data corresponding to M TB, where M is an integer greater than 0 and less than or equal to N.

Optionally, the CG information is carried in an RRC message. For example, the CG information may be a ConfiguredGrantConfig information element in the RRC message.

In some possible implementations of the apparatus 1300, the CG information includes information about the configured quantity of TBs. That the processing module 1302 is configured to obtain a configured quantity N of TBs in a CG periodicity based on the CG information includes: The processing module 1302 is configured to obtain the configured quantity N of TBs based on the information about the configured quantity of TBs.

In some possible implementations of the apparatus 1300, the CG information includes configuration information of repeated transmission and information about a quantity of repeated transmissions. That the processing module 1302 is configured to obtain a configured quantity N of TBs in a CG periodicity based on the CG information includes: The processing module 1302 is configured to obtain the configured quantity N of TBs based on the configuration information of repeated transmission and the information about the quantity of repeated transmissions.

Optionally, that the processing module 1302 is configured to obtain the configured quantity N of the TBs based on the configuration information of repeated transmission and the information about the quantity of repeated transmissions includes: The processing module 1302 is configured to: when the configuration information of repeated transmission is set to a preset value, obtain the configured quantity N of TBs based on the information about the quantity of repeated transmissions.

In some possible implementations of the apparatus 1300, the processing module 1302 is further configured to obtain duration of the CG periodicity based on the CG information.

In some possible implementations of the apparatus 1300, the interface module 1301 is further configured to send UCI to the network device, where the UCI indicates M. Optionally, the UCI includes active TB information, and the active TB information indicates M. Further, optionally, the active TB information is information about a quantity of active TBs or information about an active TB bitmap. Optionally, the UCI further includes one or more of the following information: HARQ information, RV information, NDI information, or COT sharing information.

In some possible implementations of the apparatus 1300, the interface module 1301 is specifically configured to send the UCI to the network device in a first time unit, where the first time unit is a time unit corresponding to a 1^{st} TB in the configured N TBs.

In some possible implementations of the apparatus 1300, when an interval between a second time unit and the first time unit is greater than a first threshold, the interface module 1301 is specifically configured to send the UCI to the network device in the first time unit. The second time unit is a time unit corresponding to an N^{th} TB in the configured N TBs.

In some possible implementations of the apparatus 1300, when an amount of to-be-transmitted data is greater than a second threshold, the interface module 1301 is specifically configured to send the UCI to the network device in the first time unit. The amount of to-be-transmitted data may be an amount of to-be-transmitted data corresponding to a logical channel corresponding to a CG.

In some possible implementations of the apparatus 1300, the interface module 1301 is further configured to send a MAC CE to the network device, where the MAC CE indicates at least one of M or a buffer size. The MAC CE may be used to report at least one of M or the buffer size to the network device based on an LCH or an LCG.

In some possible implementations of the apparatus 1300, the interface module 1301 is specifically configured to send the MAC CE to the network device in a first time unit, where the first time unit is a time unit corresponding to a 1^{st} TB in the configured N TBs.

In some possible implementations of the apparatus 1300, when an interval between a second time unit and the first time unit is greater than a first threshold, the interface module 1301 is specifically configured to send the MAC CE to the network device in the first time unit, where the second time unit is a time unit corresponding to an N^{th} TB in the configured N TBs.

In some possible implementations of the apparatus 1300, when an amount of to-be-transmitted data is greater than a second threshold, the interface module 1301 is specifically configured to send the MAC CE to the network device in the first time unit. The amount of to-be-transmitted data may be an amount of to-be-transmitted data corresponding to a logical channel corresponding to a CG.

In some possible implementations of the apparatus 1300, when a preset parameter is received or the preset parameter is set to a preset value, or when an interval between a second time unit and the first time unit is greater than a first threshold, and a preset parameter is received or the preset parameter is set to a preset value, or when an amount of to-be-transmitted data is greater than a second threshold, and a preset parameter is received or the preset parameter is set to a preset value, the interface module 1301 is specifically configured to send the MAC CE to the network device in the first time unit.

In some possible implementations of the apparatus 1300, the first threshold is predefined, or is configured by the network device.

In some possible implementations of the apparatus 1300, the second threshold is a total amount of data that the configured N TBs is capable of carrying.

In a possible design, the apparatus 1300 includes the interface module 1301, configured to send CG information to the terminal, where the CG information is used to configure a configured quantity N of TBs in a CG periodicity, the configured quantity N of TBs is a maximum quantity of TBs transmittable in the CG periodicity, and N is an integer greater than 0. The interface module 1301 is further configured to receive, from the terminal in the CG periodicity, uplink data corresponding to M TB, where M is an integer greater than 0 and less than or equal to N.

Optionally, the CG information is carried in an RRC message. For example, the CG information may be a ConfiguredGrantConfig information element in the RRC message.

In some possible implementations of the apparatus 1300, the CG information includes information about the configured quantity of TBs, and the information about the configured quantity of TBs is used to configure the configured quantity N of TBs.

In some possible implementations of the apparatus 1300, the CG information includes configuration information of repeated transmission and information about a quantity of repeated transmissions, and the configuration information of repeated transmission and the information about the quantity of repeated transmissions are used to configure the configured quantity N of TBs. Optionally, when the configuration information of repeated transmission is set to a preset value, the information about the quantity of repeated transmissions is used to configure the configured quantity N of TBs.

In some possible implementations of the apparatus 1300, the CG information is further used to configure duration of the CG periodicity.

In some possible implementations of the apparatus 1300, the apparatus 1300 further includes the processing module 1302. The interface module 1301 is further configured to receive UCI from the terminal, and the processing module 1302 is configured to obtain M based on the UCI. Optionally, the UCI further includes one or more of the following information: HARQ information, RV information, NDI information, or COT sharing information.

Optionally, the UCI includes active TB information. That the processing module 1302 is configured to obtain M based on the UCI includes: The processing module 1302 is configured to obtain M based on the active TB information. Optionally, the active TB information is information about a quantity of active TBs or information about an active TB bitmap.

In some possible implementations of the apparatus 1300, the interface module 1301 is specifically configured to receive the UCI from the terminal in a first time unit, where the first time unit is a time unit corresponding to a 1^{st} TB in the configured N TBs.

In some possible implementations of the apparatus 1300, the interface module 1301 is further configured to: receive a MAC CE from the terminal, and obtain at least one of M or a buffer size based on the MAC CE. It may be understood that when the buffer size is obtained, the apparatus 1300 may further obtain M. The network device may obtain an amount of to-be-transmitted data of the terminal based on the buffer size, and the apparatus 1300 also learns of an amount of data that can be carried by each of the N TBs configured in the CG periodicity. Therefore, a quantity M of TBs actually required by the terminal for transmission in the CG periodicity may be determined.

In some possible implementations of the apparatus 1300, the interface module 1301 is specifically configured to receive a MAC CE from the terminal in a first time unit, where the first time unit is a time unit corresponding to a 1^{st} TB in the configured N TBs.

It may be understood that, for beneficial effects corresponding to the apparatus 1300 and various possible implementations, refer to the descriptions in the foregoing method embodiments. Details are not described herein again.

Optionally, the apparatus 1300 may further include the storage module 1303, configured to store data or instructions (which may also be referred to as code or a program). The another module may interact with or be coupled to the storage module, to implement a corresponding method or function. For example, the processing module 1302 may read the data or the instructions in the storage module 1303, so that the apparatus 1300 implements the method in the foregoing embodiments.

For example, the module in the foregoing apparatus may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the module in the apparatus may be implemented by scheduling a program by a processing element, the processing element may be a general-purpose processor, for example, a central processing unit (central processing unit, CPU) or another processor that can invoke the program. For another example, the units may be integrated and implemented in a form of a system-on-a-chip (system-on-a-chip, SOC).

FIG. 14 is a schematic diagram of an apparatus according to an embodiment of this application. The apparatus may be configured to implement the foregoing method 700 and various possible implementations. As shown in FIG. 14, the apparatus includes a processor 1410 and an interface 1430, and the processor 1410 is coupled to the interface 1430. The interface 1430 is configured to communicate with another module or device. The interface 1430 may be a transceiver or an input/output interface. The interface 1430 may be, for example, an interface circuit. Optionally, the apparatus further includes a memory 1420, configured to store instructions executed by the processor 1410, store input data for the processor 1410 to run the instructions, or store data generated after the processor 1410 runs the instructions.

The method 700 and various possible implementations may be implemented by the processor 1410 by invoking the program or the instructions stored in the memory 1420. The memory 1420 may be inside the apparatus, or may be outside the apparatus. This is not limited in this application.

Optionally, functions/implementation processes of the interface module 1301 and the processing module 1302 in FIG. 13 may be implemented by using the processor 1410 in the apparatus shown in FIG. 14. Alternatively, a function/implementation process of the processing module 1302 in FIG. 13 may be implemented by using the processor 1410 in the apparatus shown in FIG. 14, and a function/implementation process of the interface module 1301 in FIG. 13 may be implemented by the interface 1430 in the apparatus shown in FIG. 14. For example, the function/implementation process of the interface module 1301 may be implemented by the processor by invoking the program instructions in the memory to drive the interface 1430.

When the apparatus is a chip used in a terminal, the terminal chip implements functions of the terminal in the foregoing method embodiments. The chip receives information from another module (for example, a radio frequency module or an antenna) in the terminal, where the information is from another terminal or a radio access network device; or the chip sends information to another module (for example, a radio frequency module or an antenna) in the terminal, where the information is sent by the terminal to another terminal or a radio access network device.

When the apparatus is a chip used in a radio access network device, the chip implements functions of the radio access network device in the foregoing method embodiments. The chip receives information from another module (for example, a radio frequency module or an antenna) in the radio access network device, where the information is from another radio access network device or a terminal; or the chip sends information to another module (for example, a radio frequency module or an antenna) in the radio access network device, where the information is sent by the radio access network device to another radio access network device or a terminal.

A person of ordinary skill in the art may understand that various numbers such as first and second in this application are merely used for differentiation for ease of description, and are not used to limit the scope of embodiments of this application or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Steps of the methods described in embodiments of this application may be directly embedded into hardware, a software unit executed by a processor, or a combination thereof. The software unit may be stored in a random access memory (random access memory, RAM), a flash memory, a read-only memory (read-only memory, ROM), a register, a hard disk, a removable disk, or a storage medium in any other form in the art. For example, the storage medium may be connected to the processor, so that the processor can read information from the storage medium and can write information into the storage medium. Optionally, the storage medium may alternatively be integrated into the processor. The processor and the storage medium may be disposed in an ASIC.

This application further provides a computer-readable medium. The computer-readable medium stores a computer program, and when the computer program is executed by a computer, a function of any one of the foregoing method embodiments is implemented.

This application further provides a computer program product. When the computer program product is executed by a computer, a function of any one of the foregoing method embodiments is implemented.

For same or similar parts in embodiments of this application, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
receiving configured grant CG information from a network device;
obtaining a configured quantity N of transport blocks TBs in a CG periodicity based on the CG information, wherein the configured quantity N of TBs is a maximum quantity of TBs transmittable in the CG periodicity, and N is an integer greater than 0; and
sending, to the network device in the CG periodicity, uplink data corresponding to M TB, wherein M is an integer greater than 0 and less than or equal to N.

2. The method according to claim 1, wherein the CG information comprises information about the configured quantity of TBs; and
the obtaining a configured quantity N of TBs in a CG periodicity based on the CG information comprises:
obtaining the configured quantity N of TBs based on the information about the configured quantity of TBs.

3. The method according to claim 1, wherein the CG information comprises configuration information of repeated transmission and information about a quantity of repeated transmissions; and
the obtaining a configured quantity N of TBs in a CG periodicity based on the CG information comprises:
obtaining the configured quantity N of TBs based on the configuration information of repeated transmission and the information about the quantity of repeated transmissions.

4. The method according to claim 3, wherein the obtaining the configured quantity N of TBs based on the configuration information of repeated transmission and the information about the quantity of repeated transmissions comprises:
when the configuration information of repeated transmission is set to a preset value, obtaining the configured quantity N of TBs based on the information about the quantity of repeated transmissions.

5. The method according to any one of claims 1 to 4, wherein the method further comprises:
sending uplink control information UCI to the network device, wherein the UCI indicates M.

6. The method according to claim 5, wherein the UCI comprises active TB information, and the active TB information indicates M.

7. The method according to claim 6, wherein the UCI further comprises one or more of the following: hybrid automatic repeat request HARQ information, redundancy version RV information, new data indicator NDI information, or channel occupancy time COT sharing information.

8. The method according to any one of claims 5 to 7, wherein the sending UCI to the network device comprises:
sending the UCI to the network device in a first time unit, wherein
the first time unit is a time unit corresponding to a 1^{st} TB in the configured N TBs.

9. The method according to claim 8, wherein the sending the UCI to the network device in a first time unit comprises:
when an interval between a second time unit and the first time unit is greater than a first threshold, sending the UCI to the network device in the first time unit, wherein the second time unit is a time unit corresponding to an N^{th} TB in the configured N TBs.

10. The method according to claim 8, wherein the sending the UCI to the network device in a first time unit comprises:
when an amount of to-be-transmitted data is greater than a second threshold, sending the UCI to the network device in the first time unit.

11. The method according to any one of claims 1 to 4, wherein the method further comprises:
sending a media access control MAC control element CE to the network device, wherein the MAC CE indicates at least one of the following: M or a buffer size.

12. The method according to claim 11, wherein the sending a MAC CE to the network device comprises:
sending the MAC CE to the network device in a first time unit, wherein
the first time unit is a time unit corresponding to a 1^{st} TB in the configured N TBs.

13. The method according to claim 12, wherein the sending the MAC CE to the network device in a first time unit comprises:
when an interval between a second time unit and the first time unit is greater than a first threshold, sending the MAC CE to the network device in the first time unit, wherein the second time unit is a time unit corresponding to an N^{th} TB in the configured N TBs.

14. The method according to claim 12, wherein the sending the MAC CE to the network device in a first time unit comprises:
when an amount of to-be-transmitted data is greater than a second threshold, sending the MAC CE to the network device in the first time unit.

15. The method according to claim 12, wherein the sending the MAC CE to the network device in a first time unit comprises:
when a preset parameter is received or the preset parameter is set to a preset value, sending the MAC CE to the network device in the first time unit.

16. The method according to claim 12, wherein the sending the MAC CE to the network device in a first time unit comprises:
when an interval between a second time unit and the first time unit is greater than a first threshold, and a preset parameter is received or the preset parameter is set to a preset value, sending the MAC CE to the network device in the first time unit, wherein the second time unit is a time unit corresponding to an N^{th} TB in the configured N TBs.

17. The method according to claim 12, wherein the sending the MAC CE to the network device in a first time unit comprises:
when an amount of to-be-transmitted data is greater than a second threshold, and a preset parameter is received or the preset parameter is set to a preset value, sending the MAC CE to the network device in the first time unit.

18. The method according to claim 9, 13, or 16, wherein the first threshold is predefined, or the first threshold is configured by the network device.

19. The method according to claim 10, 14, or 17, wherein the second threshold is a total amount of data that the configured N TBs is capable of carrying.

20. A communication method, comprising:
sending configured grant CG information to a terminal, wherein the CG information is used to configure a configured quantity N of transport blocks TBs in a CG periodicity, the configured quantity N of TBs is a maximum quantity of TBs transmittable in the CG periodicity, and N is an integer greater than 0; and
receiving, from the terminal in the CG periodicity, uplink data corresponding to M TB, wherein M is an integer greater than 0 and less than or equal to N.

21. The method according to claim 20, wherein the CG information comprises information about the configured quantity of TBs, and the information about the configured quantity of TBs is used to configure the configured quantity N of TBs.

22. The method according to claim 20, wherein the CG information comprises configuration information of repeated transmission and information about a quantity of repeated transmissions, and the configuration information of repeated transmission and the information about the quantity of repeated transmissions are used to configure the configured quantity N of TBs.

23. The method according to claim 22, wherein when the configuration information of repeated transmission is set to a preset value, the information about the quantity of repeated transmissions is used to configure the configured quantity N of TBs.

24. The method according to any one of claims 20 to 23, wherein the method further comprises:
receiving uplink control information UCI from the terminal; and
obtaining M based on the UCI.

25. The method according to claim 24, wherein the UCI comprises active TB information; and
the obtaining M based on the UCI comprises:
obtaining M based on the active TB information.

26. The method according to claim 25, wherein the UCI further comprises one or more of the following: hybrid automatic repeat request HARQ information, redundancy version RV information, new data indicator NDI information, or channel occupancy time COT sharing information.

27. The method according to any one of claims 24 to 26, wherein the receiving UCI from the terminal comprises:
receiving the UCI from the terminal in a first time unit, wherein
the first time unit is a time unit corresponding to a 1^{st} TB in the configured N TBs.

28. The method according to any one of claims 20 to 23, wherein the method further comprises:
receiving a media access control MAC control element CE from the terminal; and
obtaining at least one of the following: M or a buffer size based on the MAC CE.

29. The method according to claim 28, wherein the receiving a MAC CE from the terminal comprises:
receiving the MAC CE from the terminal in a first time unit, wherein
the first time unit is a time unit corresponding to a 1^{st} TB in the configured N TBs.

30. A communication apparatus, comprising a processor, wherein the processor is coupled to a memory, the memory is configured to store a program or instructions, and when the program or the instructions are executed by the processor, the apparatus is enabled to perform the method according to any one of claims 1 to 19.

31. A communication apparatus, comprising a processor, wherein the processor is coupled to a memory, the memory is configured to store a program or instructions, and when the program or the instructions are executed by the processor, the apparatus is enabled to perform the method according to any one of claims 20 to 29.

32. A computer-readable storage medium, wherein the computer-readable storage medium stores instructions, and when the instructions are executed, a computer is enabled to perform the method according to any one of claims 1 to 19, or the computer is enabled to perform the method according to any one of claims 20 to 29.

33. A communication apparatus, comprising a module configured to perform the method according to any one of claims 1 to 19.

34. A communication apparatus, comprising a module configured to perform the method according to any one of claims 20 to 29.

35. A computer program product, comprising computer program code, wherein when the computer program code is run, the method according to any one of claims 1 to 19 is performed, or the method according to any one of claims 20 to 29 is performed.

36. A chip, comprising a processor, wherein the processor is coupled to a memory, the memory is configured to store a program or instructions, and when the program or the instructions are executed by the processor, the chip is enabled to perform the method according to any one of claims 1 to 19.

37. A chip, comprising a processor, wherein the processor is coupled to a memory, the memory is configured to store a program or instructions, and when the program or the instructions are executed by the processor, the chip is enabled to perform the method according to any one of claims 20 to 29.

38. A communication system, comprising the communication apparatus according to claim 30 and the communication apparatus according to claim 31, or comprising the communication apparatus according to claim 33 and the communication apparatus according to claim 34.
